# EUROPEAN PATENT APPLICATION

(11) **EP 4 223 480 A1**
(43) Date of publication of application: **09.08.2023**
(21) Application number: 21875738.3
(22) Date of filing: 29.09.2021
(51) Int. Cl.: B29C 45/16, B44C 1/17, B32B 7/06, B32B 3/30

(54) **TRANSFER SHEET AND METHOD FOR PRODUCING RESIN MOLDED ARTICLE USING SAME**

(30) Priority: 29.09.2020 JP 2020163838; 29.09.2020 JP 2020163839
(71) Applicant: DAI NIPPON PRINTING CO., LTD., Tokyo 162-8001 (JP)
(72) Inventor: SAKONAKA, Kazuyuki, Tokyo 162-8001 (JP); ARIYAMA, Minoru, Tokyo 162-8001 (JP); NAKAMOTO, Ryo, Tokyo 162-8001 (JP)
(74) Representative: Beck Greener LLP
(86) International application number: PCT/JP2021/035985
(87) International publication number: WO 2022/071441

(57) **Abstract**

Provided is a transfer sheet capable of shaping linear recesses suitably on a surface of a transfer layer that is to be transferred to a resin molded article, by transfer of the transfer sheet. This transfer sheet is obtained by laminating, in this order, at least a transfer layer, a substrate for transferring, and linear recess-shaping layers. A plurality of the linear recess-shaping layers are spaced apart and disposed on the substrate for transferring. The line width of each of the linear recess-shaping layers is at least 200 µm. The distance between the linear recess-shaping layers is at least 0.7 times of the line width.

## Description

### TECHNICAL FIELD

The present disclosure relates to a transfer sheet and a method for producing a resin molded article using the same.

### BACKGROUND ART

For resin molded articles used for automobile interiors and exteriors, building interior materials, and home electric appliances, resin molded articles used for organic glass used as an alternative material for inorganic glass, and the like, a lamination technique using a decorative sheet is used for the purpose of surface protection, impartation of the design property, and the like. Decorative sheets used in such a technique can be roughly divided into laminate type decorative sheets and transfer type decorative sheets (that is, transfer sheets).

In a laminate type decorative sheet, a protective layer is laminated on a support base material so as to be positioned on the outermost surface, and a resin to be molded is laminated on the support base material side, so that the decorative sheet is used such that the support base material is incorporated into a resin molded article. On the other hand, in a transfer type decorative sheet, a protective layer is laminated on a support base material directly or with a release layer provided as necessary interposed therebetween, and the support base material is peeled off after a resin to be molded is laminated on a side opposite to the support base material, so that the decorative sheet is used such that the support base material does not remain in a resin molded article. These two types of decorative sheets are used in different applications according to the shape, the desired function, and the like of the resin molded article.

In the case of the transfer type decorative sheet, there is a problem that it is more difficult to design a resin composition for forming the protective layer than in the case of the laminate type because other layers such as a design layer and an adhesive layer may be laminated on the protective layer, the protective layer is laminated on a release layer in the case where the release layer is provided, the transferring base material needs to be peeled from the protective layer in molding processing, and the surface exposed by peeling the transferring base material needs to exhibit excellent physical properties.

An injection molding simultaneous decorating method has been used for decorating a resin molded body having a complicated surface shape such as a three-dimensional curved surface. The injection molding simultaneous decorating method is a method in which a decorative sheet inserted into a mold for in-mold molding at the time of inj ection molding is integrated with a molten injected resin injected into a cavity to decorate a surface of a resin molded body. Furthermore, depending on the difference in the configuration (the above-described laminate type and transfer type decorative sheets) of the decorative sheet integrated with the resin molded body, methods are usually roughly classified into an injection molding simultaneous lamination decoration method and an injection molding simultaneous transfer decoration method.

In the injection molding simultaneous transfer decoration method, the transfer layer side of the transfer sheet is disposed to face the inside of the mold, and the transfer sheet is heated from the transfer layer side with a heating platen to mold the transfer sheet so that the transfer sheet will follow the internal shape of the mold. Next, the molten resin to be injected is injected into the cavity to integrate the transfer sheet and the resin for injection. Then, after the resin molded body is cooled and taken out from the mold, the transferring base material of the transfer sheet is peeled off, whereby a resin molded article having a decorative layer formed by transfer of the transfer layer can be obtained.

### PRIOR ART DOCUMENT

### PATENT DOCUMENT

Patent Document 1: Japanese Patent Laid-open Publication No. 2015-163434

### SUMMARY OF THE INVENTION

### PROBLEMS TO BE SOLVED BY THE INVENTION

As a method for obtaining a resin molded article having an uneven shape by shaping the surface of the transfer layer into the uneven shape at the time of transfer of the transfer sheet, there is a method of forming in a mold an uneven shape corresponding to the uneven shape in advance. However, in this method, it is necessary to prepare a mold for each variation of the uneven shape.

Under such circumstances, a main object of a first aspect in the present disclosure is to provide a transfer sheet capable of suitably shaping linear concave portions in a surface of a transfer layer that is to be transferred to a resin molded article, by transfer of the transfer sheet. Furthermore, another object of the first aspect in the present disclosure is to provide a method for producing a resin molded article using the transfer sheet.

Further, if variations (for example, the shape of the concave portion is multitiered, conical, pyramidal, or the like) can be provided in the shape of the concave portion to be formed in the surface of the transfer layer without providing the mold with the above uneven shape, it is possible to provide resin molded articles having various designs.

Under such circumstances, a main object of a second aspect in the present disclosure is to provide a transfer sheet capable of suitably forming an uneven shape on a surface of a transfer layer that is to be transferred to a resin molded article, by transfer of the transfer sheet. Furthermore, another object of the second aspect in the present disclosure is to provide a method for producing a resin molded article using the transfer sheet.

### MEANS FOR SOLVING THE PROBLEM

The first aspect in the present disclosure provides an invention of the following aspects.

Item 1. A transfer sheet including at least a transfer layer, a transferring base material, and a linear concave portion shaping layer laminated in this order,
in which a plurality of sections of the linear concave portion shaping layer are disposed on the transferring base material at an interval,
the line width of each of the sections of the linear concave portion shaping layer is 200 µm or more, and
the interval between the sections of the linear concave portion shaping layer is 0.7 times or more the line width.

Item 2. The transfer sheet according to item 1, in which the linear concave portion shaping layer has a thickness of 20 µm or more.

Item 3. The transfer sheet according to item 1 or 2, in which the transferring base material has a thickness of 50 µm or more and 100 µm or less.

Item 4. The transfer sheet according to any one of items 1 to 3, further including a release layer laminated between the transfer layer and the transferring base material.

Item 5. The transfer sheet according to any one of items 1 to 4, in which the transfer layer includes a protective layer.

Item 6. A method for producing a resin molded article, including a transfer step of disposing the transfer sheet according to any one of items 1 to 5 in a mold, injecting a fluidized resin into the mold from a transfer layer side, and solidifying the resin to integrate the transfer sheet with an outer surface of a resin molding simultaneously with injection molding,
in which the linear concave portion shaping layer provided in the transfer sheet is embedded in the transferring base material in the transfer step to form linear concave portions corresponding to the shape of the linear concave portion shaping layer in a surface of the transfer layer.

The second aspect in the present disclosure provides an invention of the following aspects.

Item 7. A transfer sheet including at least a transfer layer, a transferring base material, and a concave portion shaping layer laminated in this order,
in which the concave portion shaping layer has a multitiered shape.

Item 8. The transfer sheet according to item 7, in which the concave portion shaping layer has a thickness of 20 µm or more.

Item 9. The transfer sheet according to item 7 or 8, in which the transferring base material has a thickness of 50 µm or more and 100 µm or less.

Item 10. The transfer sheet according to any one of items 7 to 9, further including a release layer laminated between the transfer layer and the transferring base material.

Item 11. The transfer sheet according to any one of items 7 to 10, in which the transfer layer includes a protective layer.

Item 12. A method for producing a resin molded article, including a transfer step of disposing the transfer sheet according to any one of items 7 to 11 in a mold, injecting a fluidized resin into the mold from a transfer layer side, and solidifying the resin to integrate the transfer sheet with an outer surface of a resin molding simultaneously with injection molding,
in which the concave portion shaping layer provided in the transfer sheet is embedded in the transferring base material in the transfer step to form a concave portion corresponding to the concave portion shaping layer in a surface of the transfer layer.

Item 13. The method for producing a resin molded article according to item 12, in which the concave portion corresponding to the concave portion shaping layer formed in the surface of the transfer layer has a multitiered shape.

Item 14. The method for producing a resin molded article according to item 12, in which the concave portion corresponding to the concave portion shaping layer formed in the surface of the transfer layer has a pyramidal or conical shape.

### ADVANTAGES OF THE INVENTION

The first aspect in the present disclosure can provide a transfer sheet capable of suitably shaping linear concave portions in a surface of a transfer layer that is to be transferred to a resin molded article, by transfer of the transfer sheet. The first aspect in the present disclosure can also provide a method for producing a resin molded article using the transfer sheet.

Further, the second aspect in the present disclosure can provide a transfer sheet capable of suitably shaping an uneven shape on a surface of a transfer layer that is to be transferred to a resin molded article, by transfer of the transfer sheet. The second aspect in the present disclosure can also provide a method for producing a resin molded article using the transfer sheet.

### BRIEF DESCRIPTION OF THE DRAWINGS

Fig. 1 schematically shows a cross-sectional structure of one mode of a transfer sheet according to a first aspect in the present disclosure.
Fig. 2 is a schematic plan view of the transfer sheet of Fig. 1.
Fig. 3 schematically shows a cross-sectional structure of one mode of the transfer sheet according to the first aspect in the present disclosure.
Fig. 4 schematically shows a cross-sectional structure of one mode of the transfer sheet according to the first aspect in the present disclosure.
Fig. 5 schematically shows a cross-sectional structure of one mode of the transfer sheet according to the first aspect in the present disclosure.
Fig. 6 schematically shows a cross-sectional structure of one mode of the transfer sheet according to the first aspect in the present disclosure.
Fig. 7 schematically shows a cross-sectional structure of one mode of the transfer sheet according to the first aspect in the present disclosure.
Fig. 8 schematically shows a cross-sectional structure of one mode of a resin molded article with a transferring base material according to the first aspect in the present disclosure.
Fig. 9 schematically shows a cross-sectional structure of one mode of the resin molded article according to the first aspect in the present disclosure.
Fig. 10 schematically illustrates a method for producing the resin molded article using the transfer sheet according to the first aspect in the present disclosure.
Fig. 11 shows examples of the arrangement of a linear concave portion shaping layer in a plan view of the transfer sheet according to the first aspect in the present disclosure, in which Fig. 11(a) shows an example in which sections of the linear concave portion shaping layer are arranged side by side in the longitudinal direction, and Fig. 11(b) shows an example in which sections of the linear concave portion shaping layer are arranged side by side in the longitudinal direction and the lateral direction.
Fig. 12 schematically shows a cross-sectional structure of one mode of a transfer sheet according to a second aspect in the present disclosure.
Fig. 13 is a schematic plan view of the transfer sheet of Fig. 1.
Fig. 14 schematically shows a cross-sectional structure of one mode of the transfer sheet according to the second aspect in the present disclosure.
Fig. 15 schematically shows a cross-sectional structure of one mode of the transfer sheet according to the second aspect in the present disclosure.
Fig. 16 schematically shows a cross-sectional structure of one mode of the transfer sheet according to the second aspect in the present disclosure.
Fig. 17 schematically shows a cross-sectional structure of one mode of the transfer sheet according to the second aspect in the present disclosure.
Fig. 18 schematically shows a cross-sectional structure of one mode of the transfer sheet according to the second aspect in the present disclosure.
Fig. 19 schematically shows a cross-sectional structure of one mode of the resin molded article with the transferring base material according to the second aspect in the present disclosure.
Fig. 20 schematically shows a cross-sectional structure of one mode of the resin molded article according to the second aspect in the present disclosure.
Fig. 21 schematically shows a cross-sectional structure of one mode of the resin molded article according to the second aspect in the present disclosure.
Fig. 22 schematically illustrates a method for producing the resin molded article using the transfer sheet according to the second aspect in the present disclosure.

### EMBODIMENTS OF THE INVENTION

### 1. Transfer Sheet

A transfer sheet according to a first aspect in the present disclosure includes at least a transfer layer, a transferring base material, and a linear concave portion shaping layer laminated in this order, in which a plurality of sections of the linear concave portion shaping layer are disposed on the transferring base material at an interval, the line width of each of the sections of the linear concave portion shaping layer is 200 µm or more, and the interval between the sections of the linear concave portion shaping layer is 0.7 times or more the line width. The transfer sheet according to the first aspect in the present disclosure has such a configuration and can therefore suitably shape linear concave portions in a surface of the transfer layer that is to be transferred to a resin molded article, by transfer of the transfer sheet. By forming linear concave portions at predetermined intervals in the surface of the resin molded article, an excellent design is obtained.

A transfer sheet according to a second aspect in the present disclosure includes at least a transfer layer, a transferring base material, and a concave portion shaping layer laminated in this order, in which the concave portion shaping layer has a multitiered shape. The transfer sheet according to the second aspect in the present disclosure has such a configuration and can therefore suitably shape an uneven shape on a surface of the transfer layer that is to be transferred to a resin molded article. Furthermore, as described later, by adjusting the number of tiers, the height, and the like of the multitiered concave portion shaping layer, variations (for example, the shape of the concave portion is multitiered, conical, pyramidal, or the like) can be provided in the shape of the concave portion to be shaped in the surface of the transfer layer.

As described later, the transfer sheets in the present disclosure may not have a decorative layer or the like and may be, for example, transparent. The transfer sheets in the present disclosure will be described below in detail.

In the present specification, the numerical range indicated by "to" means "or more" and "or less", except for descriptions in which the terms "or more" and "or less" are clearly written. For example, the description 2 to 15 mm means 2 mm or more and 15 mm or less. In addition, in the present specification, "(meth)acrylate" means "acrylate or methacrylate", and the same applies to other similar terms.

In addition, in the present specification, matters specific to the first aspect or the second aspect in the present disclosure will be clearly described as matters related to the first aspect or the second aspect, respectively, and matters common to the first aspect and the second aspect will be collectively described as a description related to the present disclosure without distinguishing the first aspect and the second aspect.

### Laminated Structure of Transfer Sheet

A transfer sheet 10 according to the first aspect in the present disclosure includes at least a transfer layer 9, a transferring base material 1, and a linear concave portion shaping layer 2 in this order. A plurality of sections of the linear concave portion shaping layer 2 are disposed on the transferring base material 1 at intervals. A release layer 3 may be provided between the transferring base material 1 and the transfer layer 9 as necessary for the purpose of, for example, improving the separability between the transferring base material 1 and the transfer layer 9. An antiblocking layer 4 may be provided between the transferring base material 1 and the linear concave portion shaping layer 2 in order to prevent blocking of the transfer sheet. In the transfer sheet 10 according to the first aspect in the present disclosure, the transferring base material 1, the linear concave portion shaping layer 2, the release layer 3 provided as necessary, and the antiblocking layer 4 provided as necessary constitute a support, and the support is peeled off and removed after the transfer sheet 10 is transferred and the transfer layer 9 is laminated on a molded resin layer 12.

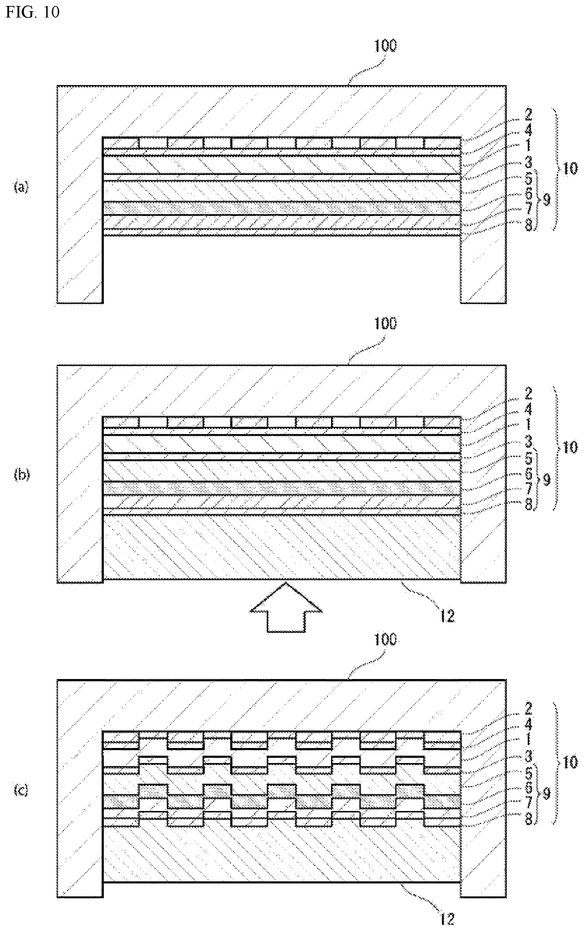

As described later, the linear concave portion shaping layer 2 is a layer for forming linear concave portions in the surface of the transfer layer 9 when the transfer sheet 10 is transferred. That is, in a transfer step of disposing the transfer sheet 10 in a mold, injecting a fluidized resin into the mold 100 from the transfer layer 9 side, and solidifying the resin to integrate the transfer sheet 10 with an outer surface of a resin molding (molded resin layer 12) simultaneously with injection molding, the linear concave portion shaping layer 2 provided in the transfer sheet 10 is embedded in the transferring base material 1 to form linear concave portions 11 corresponding to the shape of the linear concave portion shaping layer 2 in a surface of the transfer layer 9 (see Fig. 10). Therefore, in the transfer sheet 10 according to the first aspect in the present disclosure, it is not necessary to provide in the mold an uneven shape corresponding to an uneven shape to be formed on the surface of the transfer layer 9.

The transfer layer 9 can include at least one of a protective layer 5, a primer layer 6, a decorative layer 7, an adhesive layer 8, and the like. The transfer layer 9 preferably includes at least the protective layer 5. From the viewpoint of improving the adhesion of the protective layer 5, it is preferable to include the primer layer 6 on the side of the protective layer 5 opposite to the transferring base material 1 side. Further, the transfer sheet 10 according to the first aspect in the present disclosure may include the decorative layer 7 for the purpose of, for example, imparting decorativeness to the transfer sheet 10. In addition, for the purpose of, for example, improving the adhesion of the molded resin layer 12, the adhesive layer 8 may be provided on the surface of the transfer layer 9 on the side opposite to the transferring base material 1 side as necessary. In the transfer sheet 10 according to the first aspect in the present disclosure, the transfer layer 9 is transferred to the molded resin layer 12 to form a resin molded article 20 according to the first aspect in the present disclosure.

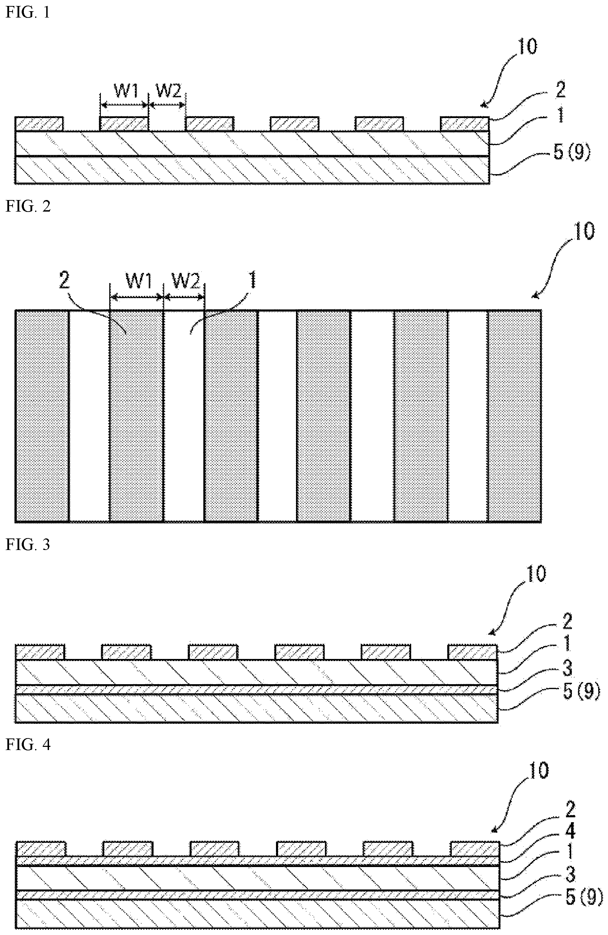

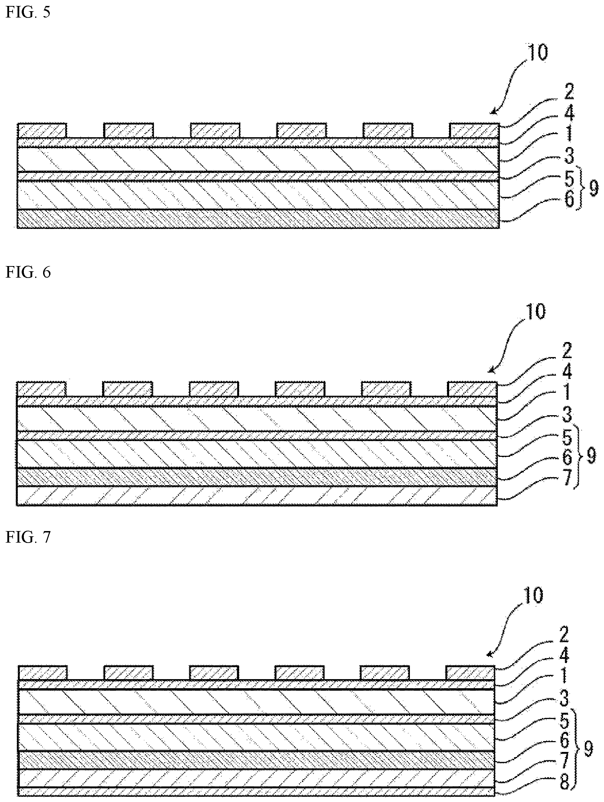

Examples of a laminated structure of the transfer sheet according to the first aspect in the present disclosure include a laminated structure in which the protective layer/the transferring base material/the linear concave portion shaping layer are laminated in this order; a laminated structure in which the protective layer/the release layer/the transferring base material/the linear concave portion shaping layer are laminated in this order; a laminated structure in which the protective layer/the release layer/the transferring base material/the antiblocking layer/the linear concave portion shaping layer are laminated in this order; a laminated structure in which the primer layer/the protective layer/the release layer/the transferring base material/the antiblocking layer/the linear concave portion shaping layer are laminated in this order; a laminated structure in which the decorative layer/the primer layer/the protective layer/the release layer/the transferring base material/the antiblocking layer/the linear concave portion shaping layer are laminated in this order; and a laminated structure in which the adhesive layer/the decorative layer/the primer layer/the protective layer/the release layer/the transferring base material/the antiblocking layer/the linear concave portion shaping layer are laminated in this order. As one aspect of the laminated structure of the transfer sheet according to the first aspect in the present disclosure, Fig. 1 schematically shows a cross-sectional structure of one mode of the transfer sheet in which the protective layer/the transferring base material/the linear concave portion shaping layer are laminated in this order. In addition, as one aspect of the laminated structure of the transfer sheet according to the first aspect in the present disclosure, Fig. 3 schematically shows a cross-sectional structure of one mode of the transfer sheet in which the protective layer/the release layer/the transferring base material/the linear concave portion shaping layer are laminated in this order. In addition, as one aspect of the laminated structure of the transfer sheet according to the first aspect in the present disclosure, Fig. 4 schematically shows a cross-sectional structure of one mode of the transfer sheet in which the protective layer/the release layer/the transferring base material/the antiblocking layer/the linear concave portion shaping layer are laminated in this order. In addition, as one aspect of the laminated structure of the transfer sheet according to the first aspect in the present disclosure, Fig. 5 schematically shows a cross-sectional structure of one mode of the transfer sheet in which the primer layer/the protective layer/the release layer/the transferring base material/the antiblocking layer/the linear concave portion shaping layer are laminated in this order. In addition, as one aspect of the laminated structure of the transfer sheet according to the first aspect in the present disclosure, Fig. 6 schematically shows a cross-sectional structure of one mode of the transfer sheet in which the decorative layer/the primer layer/the protective layer/the release layer/the transferring base material/the antiblocking layer/the linear concave portion shaping layer are laminated in this order. In addition, as one aspect of the laminated structure of the transfer sheet according to the first aspect in the present disclosure, Fig. 7 schematically shows a cross-sectional structure of one mode of the transfer sheet in which the adhesive layer/the decorative layer/the primer layer/the protective layer/the release layer/the transferring base material/the antiblocking layer/the linear concave portion shaping layer are laminated in this order. Note that "j" means a border between layers.

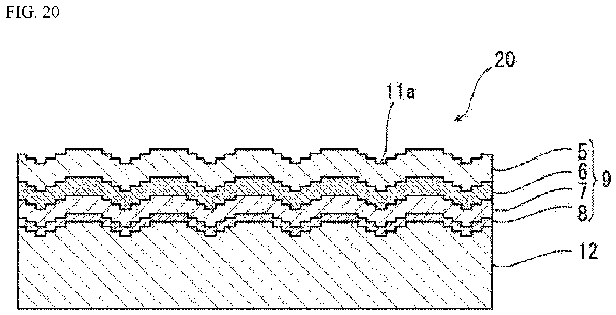

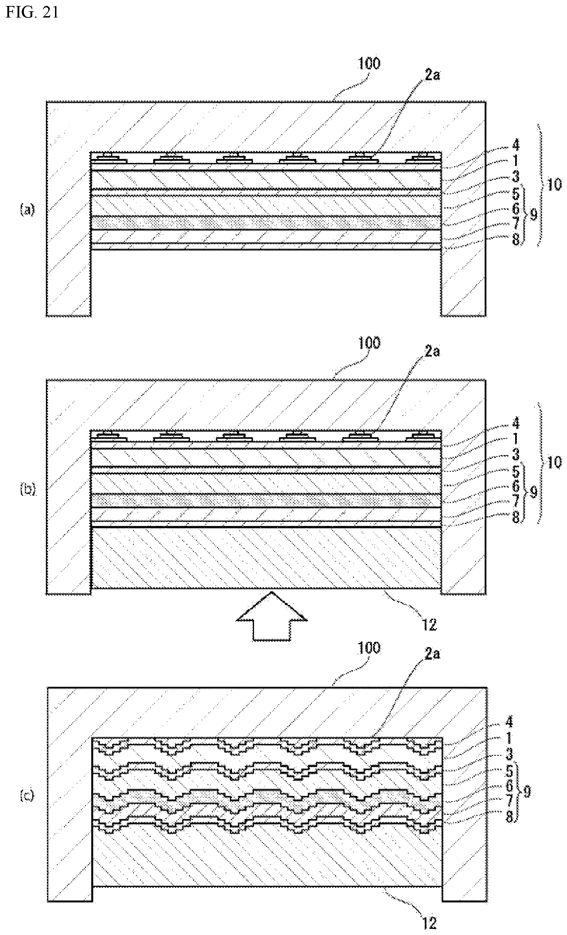

The transfer sheet 10 according to the second aspect in the present disclosure includes at least the transfer layer 9, the transferring base material 1, and a concave portion shaping layer 2a in this order. The concave portion shaping layer 2a has a multitiered shape. From the viewpoint of expressing various designs with the uneven shape formed on the transfer layer, it is preferable that a plurality of sections of the concave portion shaping layer 2a are disposed on the transferring base material 1. By the transfer of the transfer sheet 10, the plurality of sections of the concave portion shaping layer 2a provided in the transfer sheet 10 are embedded in the transferring base material 1, and a plurality of concave portions corresponding to the concave portion shaping layer 2a are formed in the surface of the transfer layer 9, so that various designs utilizing the uneven shape can be imparted to the surface of the resin molded article. In addition, as described above, by adjusting the number of tiers, the height, and the like of the multitiered concave portion shaping layer 2a, the shape of each concave portion shaped in the surface of the transfer layer 9 can be multitiered (Fig. 20), conical, pyramidal (Fig. 21), or the like, and various designs utilizing various concave shapes can be imparted to the surface of the resin molded article.

The release layer 3 may be provided between the transferring base material 1 and the transfer layer 9 as necessary for the purpose of, for example, improving the separability between the transferring base material 1 and the transfer layer 9. The antiblocking layer 4 may be provided between the transferring base material 1 and the concave portion shaping layer 2a in order to prevent blocking of the transfer sheet. In the transfer sheet 10 according to the second aspect in the present disclosure, the transferring base material 1, the concave portion shaping layer 2a, the release layer 3 provided as necessary, and the antiblocking layer 4 provided as necessary constitute a support, and the support is peeled off and removed after the transfer sheet 10 is transferred and the transfer layer 9 is laminated on the molded resin layer 12.

As described later, the concave portion shaping layer 2a is a layer for forming a concave portion in the surface of the transfer layer 9 when the transfer sheet 10 is transferred. That is, in the transfer step of disposing the transfer sheet 10 in the mold, injecting a fluidized resin into the mold 100 from the transfer layer 9 side, and solidifying the resin to integrate the transfer sheet 10 with an outer surface of a resin molding (molded resin layer 12) simultaneously with injection molding, the concave portion shaping layer 2a provided in the transfer sheet 10 is embedded in the transferring base material 1 to form the concave portion 11 corresponding to the shape of the concave portion shaping layer 2a in a surface of the transfer layer 9 (see Figs. 20 and 21). Therefore, in the transfer sheet 10 according to the second aspect in the present disclosure, it is not necessary to provide in the mold an uneven shape corresponding to an uneven shape to be formed on the surface of the transfer layer 9.

The transfer layer 9 can include at least one of the protective layer 5, the primer layer 6, the decorative layer 7, the adhesive layer 8, and the like. The transfer layer 9 preferably includes at least the protective layer 5. From the viewpoint of improving the adhesion of the protective layer 5, it is preferable to include the primer layer 6 on the side of the protective layer 5 opposite to the transferring base material 1 side. Further, the transfer sheet 10 according to the second aspect in the present disclosure may include the decorative layer 7 for the purpose of, for example, imparting decorativeness to the transfer sheet 10. In addition, for the purpose of, for example, improving the adhesion of the molded resin layer 12, the adhesive layer 8 may be provided on the surface of the transfer layer 9 on the side opposite to the transferring base material 1 side as necessary. In the transfer sheet 10 according to the second aspect in the present disclosure, the transfer layer 9 is transferred to the molded resin layer 12 to form the resin molded article 20 according to the second aspect in the present disclosure.

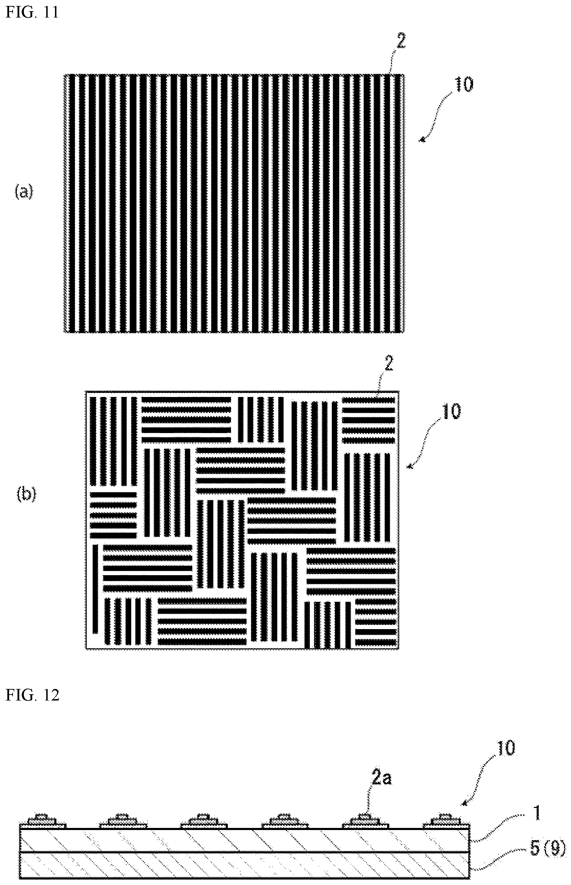

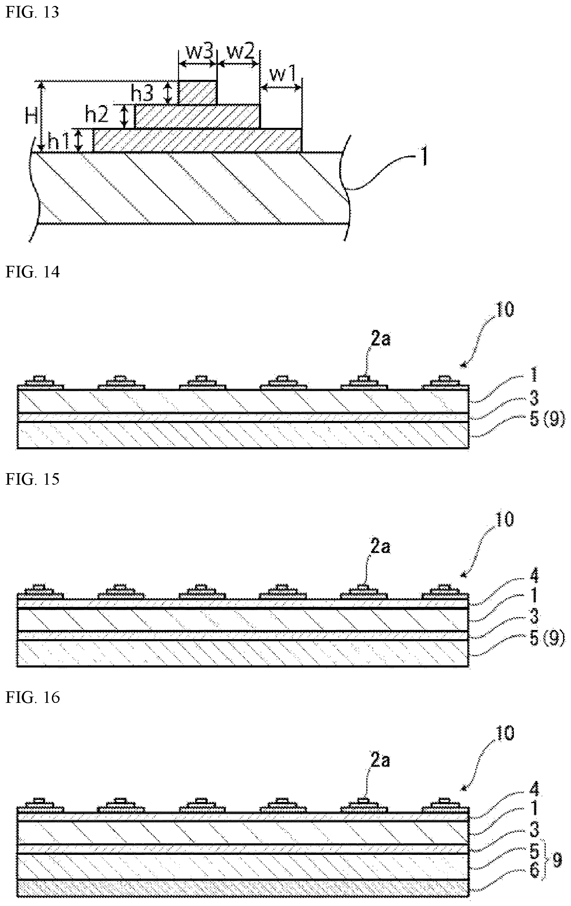

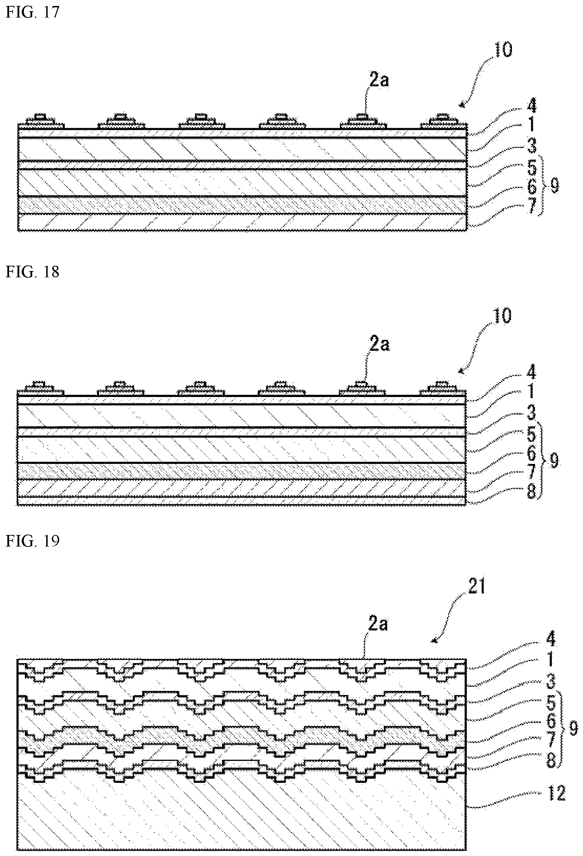

Examples of a laminated structure of the transfer sheet according to the second aspect in the present disclosure include a laminated structure in which the protective layer/the transferring base material/the concave portion shaping layer are laminated in this order; a laminated structure in which the protective layer/the release layer/the transferring base material/the concave portion shaping layer are laminated in this order; a laminated structure in which the protective layer/the release layer/the transferring base material/the antiblocking layer/the concave portion shaping layer are laminated in this order; a laminated structure in which the primer layer/the protective layer/the release layer/the transferring base material/the antiblocking layer/the concave portion shaping layer are laminated in this order; a laminated structure in which the decorative layer/the primer layer/the protective layer/the release layer/the transferring base material/the antiblocking layer/the concave portion shaping layer are laminated in this order; and a laminated structure in which the adhesive layer/the decorative layer/the primer layer/the protective layer/the release layer/the transferring base material/the antiblocking layer/the concave portion shaping layer are laminated in this order. As one aspect of the laminated structure of the transfer sheet according to the second aspect in the present disclosure, Fig. 12 schematically shows a cross-sectional structure of one mode of the transfer sheet in which the protective layer/the transferring base material/the concave portion shaping layer are laminated in this order. In addition, as one aspect of the laminated structure of the transfer sheet according to the second aspect in the present disclosure, Fig. 14 schematically shows a cross-sectional structure of one mode of the transfer sheet in which the protective layer/the release layer/the transferring base material/the concave portion shaping layer are laminated in this order. In addition, as one aspect of the laminated structure of the transfer sheet according to the second aspect in the present disclosure, Fig. 15 schematically shows a cross-sectional structure of one mode of the transfer sheet in which the protective layer/the release layer/the transferring base material/the antiblocking layer/the concave portion shaping layer are laminated in this order. In addition, as one aspect of the laminated structure of the transfer sheet according to the second aspect in the present disclosure, Fig. 16 schematically shows a cross-sectional structure of one mode of the transfer sheet in which the primer layer/the protective layer/the release layer/the transferring base material/the antiblocking layer/the concave portion shaping layer are laminated in this order. In addition, as one aspect of the laminated structure of the transfer sheet according to the second aspect in the present disclosure, Fig. 17 schematically shows a cross-sectional structure of one mode of the transfer sheet in which the decorative layer/the primer layer/the protective layer/the release layer/the transferring base material/the antiblocking layer/the concave portion shaping layer are laminated in this order. In addition, as one aspect of the laminated structure of the transfer sheet according to the second aspect in the present disclosure, Fig. 19 schematically shows a cross-sectional structure of one mode of the transfer sheet in which the adhesive layer/the decorative layer/the primer layer/the protective layer/the release layer/the transferring base material/the antiblocking layer/the concave portion shaping layer are laminated in this order. Note that "j" means a border between layers.

### Composition of Each Layer Constituting Transfer Sheet

### [Support]

As the support, the transfer sheet according to the first aspect in the present disclosure includes the transferring base material 1 and the linear concave portion shaping layer 2 and further includes the release layer 3 and the antiblocking layer 4 as necessary. At least one of the protective layer 5, the primer layer 6, the decorative layer 7, the adhesive layer 8, and the like formed on the transferring base material 1 constitutes the transfer layer 9. In the first aspect in the present disclosure, after the transfer sheet and the resin to be molded are integrally molded, peeling off at the interface between the support and the transfer layer 9 is performed to provide the resin molded article.

In addition, as the support, the transfer sheet according to the second aspect in the present disclosure includes the transferring base material 1 and the concave portion shaping layer 2a and further includes the release layer 3 and the antiblocking layer 4 as necessary. At least one of the protective layer 5, the primer layer 6, the decorative layer 7, the adhesive layer 8, and the like formed on the transferring base material 1 constitutes the transfer layer 9. In the second aspect in the present disclosure, after the transfer sheet and the resin to be molded are integrally molded, peeling off at the interface between the support and the transfer layer 9 is performed to provide the resin molded article.

### (Linear Concave Portion Shaping Layer 2)

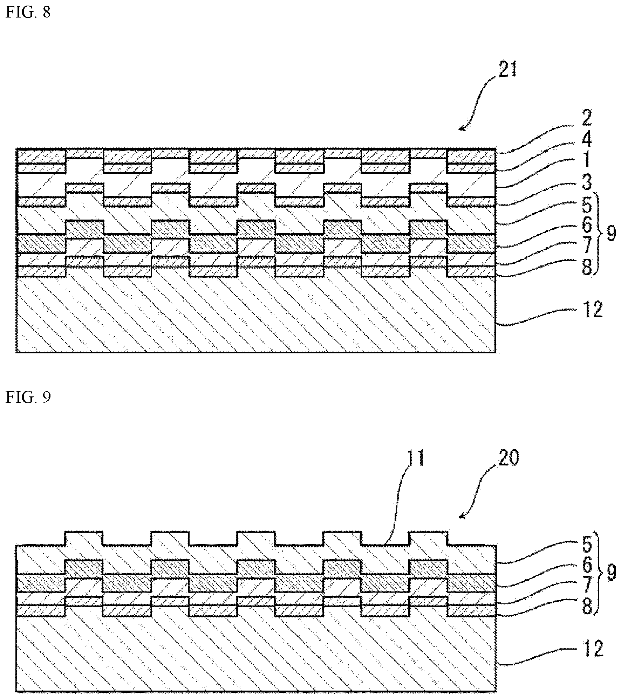

In the first aspect, a plurality of sections of the linear concave portion shaping layer 2 are disposed on the transferring base material 1 (on the side opposite to the transfer layer 9 side) at intervals. In the first aspect in the present disclosure, the linear concave portion shaping layer 2 is a layer for forming linear concave portions in the surface of the transfer layer 9 when the transfer sheet 10 is transferred. That is, in the transfer step of disposing the transfer sheet 10 in the mold 100 (Fig. 10(a)), injecting the fluidized resin into the mold 100 from the transfer layer 9 side (Fig. 10(b)), and solidifying the resin to integrate the transfer sheet 10 with the outer surface of the resin molding (molded resin layer 12) simultaneously with injection molding (Fig. 10(c)), the linear concave portion shaping layer 2 provided in the transfer sheet 10 is embedded in the transferring base material 1 to form the linear concave portions 11 corresponding to the shape of the linear concave portion shaping layer 2 in the surface of the transfer layer 9 (see Fig. 9). Therefore, in the transfer sheet 10 according to the first aspect in the present disclosure, it is not necessary to provide in the mold an uneven shape corresponding to an uneven shape to be formed in the surface of the transfer layer 9.

In the first aspect, from the viewpoint of suitably shaping the linear concave portions 11 in the surface of the transfer layer 9 to be transferred to the molded resin layer 12 by the transfer of the transfer sheet 10, in the first aspect in the present disclosure, a line width W1 of each section of the linear concave portion shaping layer 2 is set to 200 µm or more, and an interval W2 between the sections of the linear concave portion shaping layer 2 is set to 0.7 times or more the line width W1 (see Fig. 2).

In the first aspect, from the viewpoint of suitably shaping the linear concave portions 11 in the surface of the transfer layer 9 by the transfer of the transfer sheet 10, the line width W1 of each section of the linear concave portion shaping layer 2 is preferably about 200 m or more, more preferably about 300 µm or more. The line width W1 is preferably about 400 µm or less, more preferably about 350 µm or less, still more preferably about 300 µm or less. Preferable ranges of the line width W1 include about 200 to 400 µm, about 200 to 350 µm, about 200 to 300 µm, about 300 to 400 µm, and about 300 to 350 µm.

In the first aspect, from the viewpoint of suitably shaping the linear concave portions 11 in the surface of the transfer layer 9 by the transfer of the transfer sheet 10, the interval W2 between the sections of the linear concave portion shaping layer 2 is preferably about 0.7 times or more, more preferably about 1.0 time or more, still more preferably about 1.5 times or more, the line width W1. The larger the interval W2 is, the less likely the uneven shape formed on the transfer layer 9 is to collapse, but from the viewpoint of a high design property (such as a design having a delicate impression in which concave portions are formed at narrow intervals) based on the uneven shape, the interval W2 is preferably about four times or less, more preferably about three times or less, and still more preferably about twice or less. The interval W2 is preferably in the range of about 0.7 to 4 times, about 0.7 to 3 times, about 0.7 to 2 times, about 1 to 4 times, about 1 to 3 times, about 1 to 2 times, about 1.5 to 4 times, about 1.5 to 3 times, or about 1.5 to 2 times the line width W1.

In the first aspect, from the viewpoint of suitably shaping the linear concave portions 11 in the surface of the transfer layer 9 by the transfer of the transfer sheet 10, the thickness of each section of the linear concave portion shaping layer 2 is preferably about 20 µm or more, more preferably about 30 µm or more, preferably about 35 µm or more. The thickness of each section of the linear concave portion shaping layer 2 is preferably about 50 µm or less, more preferably about 45 µm or less, preferably about 40 µm or less. Preferable ranges of the thickness of each section of the linear concave portion shaping layer 2 include about 20 to 50 µm, about 20 to 45 µm, about 20 to 40 µm, about 30 to 50 µm, about 30 to 45 µm, about 30 to 40 µm, about 35 to 50 µm, about 35 to 45 µm, and about 35 to 40 µm.

In the first aspect, Figs. 1 to 7 illustrate an aspect in which the sections of the linear concave portion shaping layer 2 are arranged independently of each other, but the sections of the linear concave portion shaping layer 2 may be at least partially connected to each other. As an aspect in which the sections of the linear concave portion shaping layer 2 are connected to each other, there is an aspect in which a plurality of convex portions constituting the respective sections of the linear concave portion shaping layer 2 are connected to each other to constitute one layer having an uneven shape.

The aspect ratio of each section of the linear concave portion shaping layer 2 is preferably about 5 : 1 to 25 : 1, more preferably about 7.5 : 1 to 15 : 1. The length of each section of the linear concave portion shaping layer 2 is preferably about 1 to 10 mm, more preferably about 2 to 5 mm.

Each section of the linear concave portion shaping layer 2 is not limited to a linearly extending form as shown in Fig. 11(a) or Fig. 11(b) but can be appropriately set according to an intended design. Specifically, in a plan view of the transfer sheet 10, the shape of each section of the linear concave portion shaping layer 2 may be a curved shape or a wave-like shape such as a parabola, a hyperbola, a sinusoidal curve, a hyperbolic sine function curve, an elliptic function curve, and a cycloid in addition to a linear shape, or may be a combination of a plurality of shapes.

In the first aspect, the pattern of the arrangement of the sections of the linear concave portion shaping layer 2 is not particularly limited as long as the line width W1 is 200 µm and the interval W2 satisfies 0.7 times or more the line width W1. For example, Fig. 11 shows examples of the arrangement of the linear concave portion shaping layer 2 in a plan view of the transfer sheet 10 according to the first aspect in the present disclosure, in which Fig. 11(a) shows an example in which the sections of the linear concave portion shaping layer 2 are arranged side by side in the longitudinal direction, and Fig. 11(b) shows an example in which the sections of the linear concave portion shaping layer 2 are arranged side by side in the longitudinal direction and the lateral direction to form a pattern. For example, in a unit of pattern in which the sections of the linear concave portion shaping layer 2 are arranged, it is preferable that about 3 to 10 sections of the linear concave portion shaping layer 2 are arranged at equal intervals.

In the first aspect, the linear concave portion shaping layer 2 is preferably formed of a cured product of a curable resin. Examples of the curable resin include thermosetting resins and ionizing radiation curable resins.

In the first aspect, examples of the thermosetting resin include an unsaturated polyester resin, a polyurethane resin (including two-part curable polyurethane), an epoxy resin, an aminoalkyd resin, a phenol resin, a urea resin, a diallyl phthalate resin, a melamine resin, a guanamine resin, a melamine-urea co-condensation resin, a silicone resin, and a polysiloxane resin.

In the first aspect, a curing agent and a polymerization accelerator such as a crosslinking agent and a polymerization initiator can be added to the resin. For example, as the curing agent, an isocyanate, an organic sulfonate, or the like can be added to an unsaturated polyester resin, a polyurethane resin, or the like, and an organic amine or the like can be added to an epoxy resin. A radical initiator such as a peroxide such as methyl ethyl ketone peroxide and azoisobutylnitrile can be added to an unsaturated polyester resin.

In the first aspect, as the ionizing radiation curable resin constituting the linear concave portion shaping layer 2, those described in detail for the protective layer 5 described later can be used. The linear concave portion shaping layer 2 is preferably formed of a cured product of an ionizing radiation curable resin.

In the first aspect, the linear concave portion shaping layer 2 can be formed by applying a curable resin by a roll coating method, a gravure coating method, a gravure printing method, a silk screen printing method, or a printing method using an inkjet printer, and drying and curing the curable resin. Among them, the printing method using an inkjet printer is particularly preferable from the viewpoint of making the interval W2 narrow.

### (Concave Portion Shaping Layer 2a)

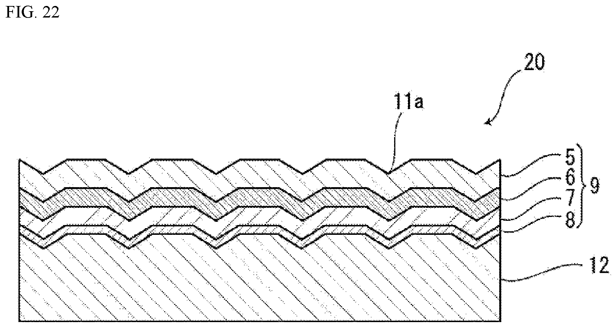

In the second aspect, the concave portion shaping layer 2a is disposed on the transferring base material 1 (on the side opposite to the transfer layer 9 side). In the second aspect in the present disclosure, the concave portion shaping layer 2a is a layer for forming a concave portion 11a in the surface of the transfer layer 9 when the transfer sheet 10 is transferred. That is, in the transfer step of disposing the transfer sheet 10 in the mold 100 (Fig. 22(a)), injecting the fluidized resin into the mold 100 from the transfer layer 9 side (Fig. 22(b)), and solidifying the resin to integrate the transfer sheet 10 with the outer surface of the resin molding (molded resin layer 12) simultaneously with injection molding (Fig. 22(c)), the concave portion shaping layer 2a provided in the transfer sheet 10 is embedded in the transferring base material 1 to form the concave portion 11a corresponding to the shape of the concave portion shaping layer 2a on the surface of the transfer layer 9 (see Figs. 20 and 21). Therefore, in the transfer sheet 10 according to the second aspect in the present disclosure, it is not necessary to provide in the mold an uneven shape corresponding to an uneven shape to be formed on the surface of the transfer layer 9.

In the second aspect, from the viewpoint of the design property of the resin molded article 20, a plurality of sections of the concave portion shaping layer 2a are preferably disposed on the transferring base material 1. By the transfer of the transfer sheet 10, the plurality of sections of the concave portion shaping layer 2a provided in the transfer sheet 10 are embedded in the transferring base material 1, and a plurality of concave portions corresponding to the concave portion shaping layer 2a are formed in the surface of the transfer layer 9, so that a design provided by the uneven shape can be imparted to the surface of the resin molded article. In addition, as described above, by adjusting the number of tiers, the height, and the like of the multitiered concave portion shaping layer 2a, the shape of each concave portion shaped in the surface of the transfer layer 9 can be multitiered (Fig. 20), conical, pyramidal (Fig. 21), or the like, and designs provided by various concave shapes can be imparted to the surface of the resin molded article.

In the second aspect, Fig. 13 is a schematic plan view of the transfer sheet in Fig. 12 and illustrates the case where the number of tiers of the concave portion shaping layer 2a is three, the overall height of the concave portion shaping layer 2a is H, the height of the first tier is h1, the height of the second tier is h2, the height of the third tier is h3, the width of the first tier is w1, the width of the second tier is w2, and the width of the third tier is w3.

In the second aspect, the number of tiers of the concave portion shaping layer 2a is not particularly limited, but in the case where the shape of each concave portion shaped in the surface of the transfer layer 9 is multitiered, the number of tiers is, for example, preferably about two to five although it depends on the width w, the height h, and the like of each tier. In addition, in the case where the shape of each concave portion shaped in the surface of the transfer layer 9 is a conical shape or a pyramidal shape (the shape of each tier of the concave portion shaping layer 2a is not reflected in the concave portion, and the concave portion 11a has a smooth slope. See Fig. 21), the number of tiers is, for example, preferably 10 or more although it depends on the width w of each tier.

In the second aspect, from the viewpoint of suitably shaping the concave portion 11a in the surface of the transfer layer 9 by the transfer of the transfer sheet 10, the height H (overall height) of the concave portion shaping layer 2a is preferably about 20 µm or more, more preferably about 30 µm or more, preferably about 35 µm or more. The height H of the concave portion shaping layer 2a is preferably about 300 µm or less, more preferably about 250 µm or less, preferably about 200 µm or less.
Preferable ranges of the height H of the concave portion shaping layer 2a include about 20 to 300 µm, about 20 to 250 µm, about 20 to 200 µm, about 30 to 300 µm, about 30 to 250 µm, about 30 to 200 µm, about 35 to 300 µm, about 35 to 250 µm, and about 35 to 200 µm.

In the second aspect, the height h of each tier of the concave portion shaping layer 2a is not particularly limited, but in the case where the shape of each concave portion shaped in the surface of the transfer layer 9 is multitiered, the height h of each tier is preferably about 10 µm or more, more preferably about 15 µm or more, still more preferably about 20 µm or more. In this case, the height h of each tier is preferably about 35 µm or less, more preferably about 30 µm or less, still more preferably about 25 µm or less. Preferable ranges of the height h of each tier in this case include about 10 to 35 µm, about 10 to 30 µm, about 10 to 25 µm, about 15 to 35 µm, about 15 to 30 µm, about 15 to 25 µm, about 20 to 35 µm, about 20 to 30 µm, and about 20 to 25 µm. In the case where the shape of each concave portion shaped in the surface of the transfer layer 9 is conical or pyramidal, the height h of each tier is preferably about 30 µm or less, more preferably about 25 µm or less, still more preferably about 20 µm or less. In this case, the height h of each tier is, for example, preferably about 10 µm or more. Preferable ranges of the height h of each tier in this case include about 10 to 30 µm, about 10 to 25 µm, and about 10 to 20 µm.

In the second aspect, the width w of each tier of the concave portion shaping layer 2a is also not particularly limited, but in the case where the shape of each concave portion shaped in the surface of the transfer layer 9 is multitiered, the width w of each tier is preferably about 450 µm or more, more preferably about 800 µm or more, still more preferably about 900 µm or more. In this case, the width w of each tier is preferably about 2,000 µm or less, more preferably about 1,500 µm or less, still more preferably about 1,000 µm or less. Preferable ranges of the width w of each tier in this case include about 450 to 2,000 µm, about 450 to 1,500 µm, about 450 to 1,000 µm, about 800 to 2,000 µm, about 800 to 1,500 µm, about 800 to 1,000 µm, about 900 to 2,000 µm, about 900 to 1,500 µm, and about 900 to 1,000 µm. In the case where the shape of each concave portion shaped in the surface of the transfer layer 9 is conical or pyramidal, the width w of each tier is preferably about 100 µm or more, more preferably about 150 µm or more, still more preferably about 200 µm or more. In this case, the width w of each tier is preferably about 450 µm or less, more preferably about 300 µm or less, still more preferably about 250 µm or less. Preferable ranges of the width w of each tier in this case include about 100 to 450 µm, about 100 to 300 µm, about 100 to 250 µm, about 150 to 450 µm, about 150 to 300 µm, about 150 to 250 µm, about 200 to 450 µm, about 200 to 300 µm, and about 200 to 250 µm.

In the second aspect in the present disclosure, by adjusting the number of tiers, the height, and the width of the multitiered concave portion shaping layer 2a in, for example, the above ranges, the shape of each concave portion shaped in the surface of the transfer layer 9 can be multitiered, conical, pyramidal, or the like, and designs provided by various concave shapes can be imparted to the surface of the resin molded article. For example, if the height h of each tier of the concave portion shaping layer 2a is small, it is difficult to form tiers in the concave portion to be formed, and the slope of the concave portion tends to be smooth to form a conical shape, a pyramidal shape, or the like.

In the second aspect, Figs. 12 to 19 illustrate an aspect in which the sections of the concave portion shaping layer 2a are arranged independently of each other, but the sections of the concave portion shaping layer 2a may be at least partially connected to each other. As an aspect in which the sections of the concave portion shaping layer 2a are connected to each other, there is an aspect in which a plurality of convex portions (multitiered convex portions) constituting the respective sections of the concave portion shaping layer 2a are connected to each other to constitute one layer having an uneven shape.

In the second aspect, the pattern in which the sections of the concave portion shaping layer 2a are arranged is not particularly limited. For example, by arranging a large number of sections of the concave portion shaping layer 2a in a matrix, a resin molded article 20 having concave portions 11a formed in a matrix in the surface is obtained.

In the second aspect, the concave portion shaping layer 2a is preferably formed of a cured product of a curable resin. Examples of the curable resin include thermosetting resins and ionizing radiation curable resins.

In the second aspect, examples of the thermosetting resin include an unsaturated polyester resin, a polyurethane resin (including two-part curable polyurethane), an epoxy resin, an aminoalkyd resin, a phenol resin, a urea resin, a diallyl phthalate resin, a melamine resin, a guanamine resin, a melamine-urea co-condensation resin, a silicone resin, and a polysiloxane resin.

In the second aspect, a curing agent and a polymerization accelerator such as a crosslinking agent and a polymerization initiator can be added to the resin. For example, as the curing agent, an isocyanate, an organic sulfonate, or the like can be added to an unsaturated polyester resin, a polyurethane resin, or the like, and an organic amine or the like can be added to an epoxy resin. A radical initiator such as a peroxide such as methyl ethyl ketone peroxide and azoisobutylnitrile can be added to an unsaturated polyester resin.

In the second aspect, as the ionizing radiation curable resin constituting the concave portion shaping layer 2a, those described in detail for the protective layer 5 described later can be used. The concave portion shaping layer 2a is preferably formed of a cured product of an ionizing radiation curable resin.

In the second aspect, the concave portion shaping layer 2a can be formed by applying a curable resin by a roll coating method, a gravure coating method, a gravure printing method, a silk screen printing method, or a printing method using an inkjet printer, and drying and curing the curable resin. Among them, the printing method using an inkjet printer is particularly preferable from the viewpoint of forming the concave portion shaping layer 2a having a narrow width of each tier.

### (Transferring Base Material 1)

In the present disclosure, the transferring base material 1 is used as a support that serves as a supporting member in the transfer sheet. The transferring base material 1 used in the present disclosure is selected in consideration of vacuum molding suitability, and typically, a resin sheet made of a thermoplastic resin is used. Examples of the thermoplastic resin include a polyester resin; an acrylic resin; a polyolefin resin such as polypropylene and polyethylene; a polycarbonate resin; an acrylonitrile-butadiene-styrene resin (ABS resin); and a vinyl chloride resin.

In the present disclosure, a polyester sheet is preferably used as the transferring base material 1 from the viewpoint of suitably shaping the linear concave portion 11 or the concave portion 1 1a in the surface of the transfer layer 9 to be transferred to the molded resin layer 12 by the transfer of the transfer sheet 10. The polyester resin constituting the polyester sheet refers to a polymer containing an ester group obtained by polycondensation of a polyvalent carboxylic acid and a polyhydric alcohol, and preferable examples thereof include polyethylene terephthalate (PET), polybutylene terephthalate (PBT), and polyethylene naphthalate (PEN). Polyethylene terephthalate (PET) is particularly preferable from the viewpoint of heat resistance and dimensional stability.

The polyester sheet suitably used as the transferring base material 1 in the present disclosure is produced, for example, as follows. First, the polyester-based resin and other raw materials are supplied to a well-known melt extrusion apparatus such as an extruder and heated to a temperature equal to or higher than the melting point of the polyester-based resin to be melted. Then, while the molten polymer is extruded, the molten polymer is rapidly cooled and solidified on a rotary cooling drum to a temperature equal to or lower than the glass transition temperature to provide an unoriented sheet in a substantially amorphous state. This sheet is obtained by stretching the sheet in two axial directions to form a sheet and heat-setting the sheet. In this case, the stretching method may be sequential biaxial stretching or simultaneous biaxial stretching. If necessary, the film may be stretched again in the longitudinal and/or lateral directions before or after heat setting. In the present disclosure, in order to obtain sufficient dimensional stability, the stretch ratio is preferably seven times or less, more preferably five times or less, still more preferably three times or less in terms of area ratio. Within this range, when the obtained polyester sheet is used for the transfer sheet, the transfer sheet does not shrink again in a temperature range when a resin to be molded is injected, and sheet strength required in the temperature range can be obtained. The polyester sheet may be produced as described above, or a commercially available polyester sheet may be used.

In the case where the release layer 3 to be described later is provided, one or both surfaces of the transferring base material 1 can be subjected to a physical or chemical surface treatment such as an oxidation method and a surface roughening method as desired for the purpose of improving adhesion to the release layer 3. Examples of the oxidation method include a corona discharge treatment, a chromium oxidation treatment, a flame treatment, a hot air treatment, and an ozone/ultraviolet treatment method, and examples of the surface roughening method include a sand blasting method and a solvent treatment method. These surface treatments are appropriately selected according to the type of the transferring base material 1, but in general, a corona discharge treatment method is preferably used from the viewpoint of effects, operability, and the like. In addition, the transferring base material 1 may be subjected to a treatment such as formation of an easy-adhesive layer for the purpose of, for example, enhancing interlayer adhesion between the transferring base material 1 and a layer provided thereon. In the case where a commercially available product is used as the polyester sheet, the commercially available product subjected to the surface treatment as described above in advance or a product provided with an easy-adhesive agent layer can also be used.

From the viewpoint of suitably shaping the linear concave portion 11 or the concave portion 11a in the surface of the transfer layer 9 to be transferred to the molded resin layer 12 by the transfer of the transfer sheet 10, the thickness of the transferring base material 1 is usually preferably about 50 to 100 µm, more preferably 60 to 75 µm. As the transferring base material 1, a single layer sheet of these resins or a multiple layer sheet of the same type or different types of resins can be used.

The transferring base material 1 may or may not contain an additive. Examples of the additive include an ultraviolet absorbent, an ultraviolet reflector, and a coloring agent.

### (Release Layer 3)

The release layer 3 is provided as necessary on the surface of the transferring base material 1 on the side on which the transfer layer 9 is laminated, for the purpose of, for example, improving the separability between the transferring base material 1 and the transfer layer 9. The release layer 3 may be a whole-surface release layer covering the entire surface (entirely solid) or may be provided on a part thereof. Usually, a whole-surface release layer is preferable in consideration of separability.

The release layer 3 can be formed using one of a silicone-based resin, a fluorine-based resin, an acrylic-based resin (including, for example, an acrylic-melamine-based resin), a polyester-based resin, a polyolefin-based resin, a polystyrene-based resin, a polyurethane-based resin, a cellulose-based resin, a vinyl chloride-vinyl acetate-based copolymer resin, a thermoplastic resin such as cellulose nitrate, a copolymer of monomers constituting the thermoplastic resin, an ionizing radiation curable resin, and a product obtained by modifying any of these resins with (meth)acrylic acid or urethane, or a resin composition as a mixture of two or more thereof. Among them, an acrylic-based resin, a polyester-based resin, a polyolefin-based resin, a polystyrene-based resin, a copolymer of monomers constituting these resins, and a product obtained by urethane-modifying these resins are preferable, and more specific examples thereof include an acrylic-melamine-based resin alone, an acrylic-melamine-based resin-containing composition, a resin composition obtained by mixing a polyester-based resin with a product obtained by urethane-modifying a copolymer of ethylene and acrylic acid, and a resin composition obtained by mixing an acrylic-based resin with an emulsion of a copolymer of styrene and acrylic. Among them, it is particularly preferable to constitute the release layer 3 with the acrylic-melamine-based resin alone or a composition containing 50 mass% or more of the acrylic-melamine-based resin.

### (Ionizing Radiation Curable Resin)

The ionizing radiation curable resin to be used for formation of the release layer 3 is a resin that is crosslinked and cured by irradiation with an ionizing radiation, and specific examples thereof include those obtained by appropriately mixing at least one of a prepolymer, an oligomer, a monomer, and the like having a polymerizable unsaturated bond or an epoxy group in the molecule. Here, the ionizing radiation is as described in the section of [Protective Layer 5] described later.

As the monomer used for the ionizing radiation curable resin, (meth)acrylate monomers having a radically polymerizable unsaturated group in the molecule are suitable, and among them, a polyfunctional (meth)acrylate monomer is preferable. The polyfunctional (meth)acrylate monomer is only required to be a (meth)acrylate monomer having two or more (bi- or higher functional), preferably three or more (tri- or higher functional) polymerizable unsaturated bonds in the molecule. Specific examples of the polyfunctional (meth)acrylate monomer include ethylene glycol di(meth)acrylate, propylene glycol di(meth)acrylate, 1,4-butanediol di(meth)acrylate, 1,6-hexanediol di(meth)acrylate, neopentyl glycol di(meth)acrylate, polyethylene glycol di(meth)acrylate, hydroxypivalic acid neopentyl glycol di(meth)acrylate, dicyclopentanyl di(meth)acrylate, caprolactone-modified dicyclopentenyl di(meth)acrylate, ethylene oxide-modified phosphate di(meth)acrylate, allylated cyclohexyl di(meth)acrylate, isocyanurate di(meth)acrylate, trimethylolpropane tri(meth)acrylate, ethylene oxide-modified trimethylolpropane tri(meth)acrylate, dipentaerythritol tri(meth)acrylate, propionic acid-modified dipentaerythritol tri(meth)acrylate, pentaerythritol tri(meth)acrylate, propylene oxide-modified trimethylolpropane tri(meth)acrylate, tris(acryloxyethyl) isocyanurate, propionic acid-modified dipentaerythritol penta(meth)acrylate, dipentaerythritol hexa(meth)acrylate, ethylene oxide-modified dipentaerythritol hexa(meth)acrylate, and caprolactone-modified dipentaerythritol hexa(meth)acrylate. These monomers may be used singly or in combination of two or more thereof.

As the oligomer used for the ionizing radiation curable resin, (meth)acrylate oligomers having a radically polymerizable unsaturated group in the molecule are suitable, and among them, a polyfunctional (meth)acrylate oligomer having two or more (bi- or higher functional) polymerizable unsaturated bonds in the molecule is preferable. Examples of the polyfunctional (meth)acrylate oligomer include polycarbonate (meth)acrylate, acrylic silicone (meth)acrylate, urethane (meth)acrylate, epoxy (meth)acrylate, polyester (meth)acrylate, polyether (meth)acrylate, polybutadiene (meth)acrylate, silicone (meth)acrylate, and oligomers having a cationically polymerizable functional group in the molecule (such as a novolac-type epoxy resin, a bisphenol-type epoxy resin, an aliphatic vinyl ether, and an aromatic vinyl ether). Here, the polycarbonate (meth)acrylate is not particularly limited as long as it has a carbonate bond in the polymer main chain and a (meth)acrylate group at the terminal or side chain, and can be obtained, for example, by esterifying a polycarbonate polyol with (meth)acrylic acid. The polycarbonate (meth)acrylate may be, for example, urethane (meth)acrylate having a polycarbonate skeleton. The urethane (meth)acrylate having a polycarbonate skeleton is obtained, for example, by reacting a polycarbonate polyol, a polyvalent isocyanate compound, and hydroxy (meth)acrylate. The acrylic silicone (meth)acrylate can be obtained by radically copolymerizing a silicone macromonomer with a (meth)acrylate monomer. The urethane (meth)acrylate can be obtained, for example, by esterifying a polyurethane oligomer with (meth)acrylic acid, the polyurethane oligomer being obtained by a reaction of a polyether polyol, a polyester polyol, or a caprolactone-based polyol with a polyisocyanate compound. The epoxy (meth)acrylate can be obtained, for example, by reacting (meth)acrylic acid with an oxirane ring of a bisphenol-type epoxy resin or novolac-type epoxy resin having a relatively low molecular weight to perform esterification. A carboxyl-modified epoxy (meth)acrylate obtained by partially modifying the epoxy (meth)acrylate with a dibasic carboxylic anhydride can also be used. The polyester (meth)acrylate can be obtained, for example, by esterifying, with (meth)acrylic acid, hydroxy groups of a polyester oligomer having hydroxy groups at both terminals obtained by condensation of a polyvalent carboxylic acid and a polyhydric alcohol, or by esterifying, with (meth)acrylic acid, hydroxy groups at terminals of an oligomer obtained by adding an alkylene oxide to a polyvalent carboxylic acid. The polyether (meth)acrylate can be obtained by esterifying hydroxy groups of a polyether polyol with (meth)acrylic acid. The polybutadiene (meth)acrylate can be obtained by adding (meth)acrylic acid to a side chain of a polybutadiene oligomer. The silicone (meth)acrylate can be obtained by adding (meth)acrylic acid to the terminal or side chain of silicone having a polysiloxane bond in the main chain. Among them, a polycarbonate (meth)acrylate, urethane (meth)acrylate, and the like are particularly preferable as the polyfunctional (meth)acrylate oligomer. These oligomers may be used singly or in combination of two or more thereof.

In the case where the release layer 3 is formed using an ionizing radiation curable resin, the release layer 3 is formed, for example, by preparing an ionizing radiation curable resin composition containing fine particles and an ionizing radiation curable resin, applying the ionizing radiation curable resin composition, and crosslinking and curing the ionizing radiation curable resin composition. The viscosity of the ionizing radiation curable resin composition may be any viscosity that enables formation of an uncured resin layer by a coating method described later.

In the present disclosure, a prepared coating liquid is applied by a known method such as gravure coating, bar coating, roll coating, reverse roll coating, and comma coating, preferably gravure coating, so as to have the above-described thickness to form an uncured resin layer.

The uncured resin layer thus formed is irradiated with an ionizing radiation such as an electron beam and an ultraviolet ray to cure the uncured resin layer, thereby forming the release layer 3. Here, in the case where an electron beam is used as the ionizing radiation, the acceleration voltage thereof can be appropriately selected according to the resin to be used and the thickness of the layer, and the acceleration voltage is normally about 70 to 300 kV.

In the irradiation of the electron beam, since the transmission capability increases as the acceleration voltage increases, in the case where a resin that is easily deteriorated by electron beam irradiation is used under the release layer 3, the acceleration voltage is selected so that the transmission depth of the electron beam is substantially equal to the thickness of the release layer 3. As a result, it is possible to suppress the irradiation of the layer positioned under the release layer 3 with an excessive electron beam, and it is possible to minimize the deterioration of each layer due to the excessive electron beam.

The irradiation dose is preferably an amount with which the crosslinking density of the release layer 3 is saturated, and is usually selected in the range of 5 to 300 kGy (0.5 to 30 Mrad), preferably 10 to 50 kGy (1 to 5 Mrad).

Furthermore, the electron beam source is not particularly limited, and various electron beam accelerators such as Cockcroft-Walton type, Van de Graaff type, resonant transformer type, insulated core transformer type, linear type, Dynamitron type, and high-frequency type accelerators can be used.

In the case where an ultraviolet ray is used as the ionizing radiation, a light ray including an ultraviolet ray having a wavelength of 190 to 380 nm may be emitted. The ultraviolet light source is not particularly limited, and examples thereof include a high pressure mercury lamp, a low pressure mercury lamp, a metal halide lamp, a carbon arc lamp, and an ultraviolet light emitting diode (LED-UV).

The thickness of the release layer 3 is usually about 0.01 to 5 µm, preferably about 0.05 to 3 µm.

### [Antiblocking Layer 4]

In the transfer sheet of the present disclosure, the antiblocking layer 4 is a layer provided between the transferring base material 1 and the linear concave portion shaping layer 2 or between the transferring base material 1 and the concave portion shaping layer 2a in order to effectively suppress blocking in the process of producing the transfer sheet and the resin molded article. The antiblocking layer 4 is preferably formed of a resin composition containing fine particles and a thermoplastic resin.

The thermoplastic resin is not particularly limited, and specific examples thereof include an acrylic resin such as poly(methyl (meth)acrylate); a polyolefin-based resin such as polypropylene and polyethylene; a polycarbonate resin; a vinyl chloride-based resin such as polyvinyl chloride and vinyl chloride-vinyl acetate copolymer; polyethylene terephthalate (PET); an acrylonitrile-butadiene-styrene resin (ABS resin); and an acrylonitrile-styrene-acrylic acid ester resin. The thermoplastic resins may be used singly or in combination of two or more thereof.

The fine particles are not particularly limited, and those known as antiblocking agents can be used. Examples of the fine particles include particles such as inorganic particles and resin particles.

The inorganic particles are not particularly limited as long as they are particles formed of an inorganic compound, and examples thereof include silica particles, calcium carbonate particles, barium sulfate particles, alumina particles, and glass balloon particles, and among these, silica particles are preferable. One type of the inorganic particles may be used singly, or two or more types of inorganic particles may be used in combination.

The resin particles are not particularly limited as long as they are particles formed of a resin, and examples thereof include urethane beads, nylon beads, acrylic beads, silicone beads, styrene beads, melamine beads, urethane acrylic beads, polyester beads, and polyethylene beads. One type of the resin particles may be used singly, or two or more types of resin particles may be used in combination.

The particle size of the fine particles is, for example, 0.5 µm or more, preferably about 0.5 to 20 µm, more preferably about 1 to 10 µm. In the present disclosure, the particle size of fine particles is a value measured using a Shimadzu laser diffraction particle size analyzer SALD-2100 by an injection-type dry measurement method in which powder to be measured is injected from a nozzle using compressed air, dispersed in air, and measured.

The content of the fine particles in the antiblocking layer 4 is not particularly limited but is preferably about 1 to 15 mass%, more preferably about 3 to 10 mass%.

The thickness of the antiblocking layer 4 is not particularly limited and is, for example, 10 µm or less, preferably about 1 to 10 µm, more preferably about 2 to 5 µm. In the present disclosure, the thickness of the antiblocking layer 4 means a thickness at a portion where there is no convex portion formed by the fine particles.

The particle size of the fine particles is preferably larger than the thickness of the antiblocking layer 4. For example, the particle size of the fine particles is preferably 1.1 to 5 times, more preferably 1.3 to 3 times, the thickness of the antiblocking layer 4.

### [Transfer Layer 9]

In the transfer sheet in the present disclosure, at least one of the protective layer 5, the primer layer 6, the decorative layer 7, the adhesive layer 8, a transparent resin layer, and the like formed on the support constitutes the transfer layer 9. In the present disclosure, after the transfer sheet and the resin to be molded are integrally molded, peeling off at the interface between the support and the transfer layer 9 is performed to provide the resin molded article in which the transfer layer 9 of the transfer sheet has been transferred to the molded resin layer 12. Each of these layers will be described below in detail.

### (Protective Layer 5)

The protective layer 5 is a layer provided on the transfer layer 9 so as to be located at the surface of the resin molded article as necessary in order to enhance scratch resistance, chemical resistance, and the like of the resin molded article. The resin constituting the protective layer 5 is not particularly limited, and examples thereof include thermosetting resins, thermoplastic resins, and ionizing radiation curable resins. Among them, an ionizing radiation curable resin is preferable from the viewpoint of achieving both excellent scratch resistance and excellent three-dimensional moldability.

The thermosetting resin constituting the protective layer 5 is not particularly limited, and examples thereof include a resin containing an acrylic polyol; a polyester polyol; a urethane polyol such as a polyester urethane polyol and an acrylic-urethane polyol; or a polyolefin polyol such as a polyethylene polyol, a polypropylene polyol, a polybutadiene polyol, and a polyisoprene polyol; and a curing agent. The thermosetting resins may be used singly or in combination of two or more thereof.

The thermoplastic resin constituting the protective layer 5 is not particularly limited, and examples thereof include an acrylic resin such as poly(methyl (meth)acrylate) and poly(ethyl (meth)acrylate); a polyolefin-based resin such as polypropylene and polyethylene; a polycarbonate resin; a vinyl chloride-based resin; polyethylene terephthalate (PET); an acrylonitrile-butadiene-styrene resin (ABS resin); and an acrylonitrile-styrene-acrylic acid ester resin. The thermoplastic resins may be used singly or in combination of two or more thereof.

### (Ionizing Radiation Curable Resin)

The ionizing radiation curable resin to be used for formation of the protective layer 5 is a resin that is crosslinked and cured by irradiation with an ionizing radiation, and specific examples thereof include those obtained by appropriately mixing at least one of a prepolymer, an oligomer, a monomer, and the like having a polymerizable unsaturated bond or an epoxy group in the molecule. Here, the ionizing radiation means an electromagnetic wave or a charged particle beam having an energy quantum capable of polymerizing or crosslinking molecules, and although an ultraviolet ray (UV) or an electron beam (EB) is usually used, an electromagnetic wave such as an X-ray and a γ-ray, and a charged particle beam such as an α-ray and an ion beam are also included. Among ionizing radiation curable resins, electron beam curable resins can be made solvent-free, do not require an initiator for photopolymerization, have stable curing characteristics, and thus are suitably used in formation of the protective layer 5.

In the laminated body of the present disclosure, in the case where an ionizing radiation curable resin is used for formation of the protective layer 5, the protective layer 5 in the form of the laminated body may be cured, uncured, or semi-cured. In the case where the protective layer 5 in the form of the laminated body is uncured or semi-cured, the protective layer 5 is cured after the laminated body is formed.

As the monomer used for the ionizing radiation curable resin, (meth)acrylate monomers having a radically polymerizable unsaturated group in the molecule are suitable, and among them, a polyfunctional (meth)acrylate monomer is preferable. The polyfunctional (meth)acrylate monomer is only required to be a (meth)acrylate monomer having two or more (bi- or higher functional), preferably three or more (tri- or higher functional) polymerizable unsaturated bonds in the molecule. Specific examples of the polyfunctional (meth)acrylate include ethylene glycol di(meth)acrylate, propylene glycol di(meth)acrylate, 1,4-butanediol di(meth)acrylate, 1,6-hexanediol di(meth)acrylate, neopentyl glycol di(meth)acrylate, polyethylene glycol di(meth)acrylate, hydroxypivalic acid neopentyl glycol di(meth)acrylate, dicyclopentanyl di(meth)acrylate, caprolactone-modified dicyclopentenyl di(meth)acrylate, ethylene oxide-modified phosphate di(meth)acrylate, allylated cyclohexyl di(meth)acrylate, isocyanurate di(meth)acrylate, trimethylolpropane tri(meth)acrylate, ethylene oxide-modified trimethylolpropane tri(meth)acrylate, dipentaerythritol tri(meth)acrylate, propionic acid-modified dipentaerythritol tri(meth)acrylate, pentaerythritol tri(meth)acrylate, propylene oxide-modified trimethylolpropane tri(meth)acrylate, tris(acryloxyethyl) isocyanurate, propionic acid-modified dipentaerythritol penta(meth)acrylate, dipentaerythritol hexa(meth)acrylate, ethylene oxide-modified dipentaerythritol hexa(meth)acrylate, and caprolactone-modified dipentaerythritol hexa(meth)acrylate. These monomers may be used singly or in combination of two or more thereof.

As the oligomer used for the ionizing radiation curable resin, (meth)acrylate oligomers having a radically polymerizable unsaturated group in the molecule are suitable, and among them, a polyfunctional (meth)acrylate oligomer having two or more (bi- or higher functional) polymerizable unsaturated bonds in the molecule is preferable. Examples of the polyfunctional (meth)acrylate oligomer include polycarbonate (meth)acrylate, acrylic silicone (meth)acrylate, urethane (meth)acrylate, epoxy (meth)acrylate, polyester (meth)acrylate, polyether (meth)acrylate, polybutadiene (meth)acrylate, silicone (meth)acrylate, and oligomers having a cationically polymerizable functional group in the molecule (such as a novolac-type epoxy resin, a bisphenol-type epoxy resin, an aliphatic vinyl ether, and an aromatic vinyl ether). Here, the polycarbonate (meth)acrylate is not particularly limited as long as it has a carbonate bond in the polymer main chain and a (meth)acrylate group at the terminal or side chain, and can be obtained, for example, by esterifying a polycarbonate polyol with (meth)acrylic acid. The polycarbonate (meth)acrylate may be, for example, a polycarbonate-based urethane (meth)acrylate, which is urethane (meth)acrylate having a polycarbonate skeleton. The urethane (meth)acrylate having a polycarbonate skeleton is obtained, for example, by reacting a polycarbonate polyol, a polyvalent isocyanate compound, and hydroxy (meth)acrylate. The acrylic silicone (meth)acrylate can be obtained by radically copolymerizing a silicone macromonomer with a (meth)acrylate monomer. The urethane (meth)acrylate can be obtained, for example, by esterifying a polyurethane oligomer with (meth)acrylic acid, the polyurethane oligomer being obtained by a reaction of a polyether polyol, a polyester polyol, or a caprolactone-based polyol with a polyisocyanate compound. The epoxy (meth)acrylate can be obtained, for example, by reacting (meth)acrylic acid with an oxirane ring of a bisphenol-type epoxy resin or novolac-type epoxy resin having a relatively low molecular weight to perform esterification. A carboxyl-modified epoxy (meth)acrylate obtained by partially modifying the epoxy (meth)acrylate with a dibasic carboxylic anhydride can also be used. The polyester (meth)acrylate can be obtained, for example, by esterifying, with (meth)acrylic acid, hydroxy groups of a polyester oligomer having hydroxy groups at both terminals obtained by condensation of a polyvalent carboxylic acid and a polyhydric alcohol, or by esterifying, with (meth)acrylic acid, hydroxy groups at terminals of an oligomer obtained by adding an alkylene oxide to a polyvalent carboxylic acid. The polyether (meth)acrylate can be obtained by esterifying hydroxy groups of a polyether polyol with (meth)acrylic acid. The polybutadiene (meth)acrylate can be obtained by adding (meth)acrylic acid to a side chain of a polybutadiene oligomer. The silicone (meth)acrylate can be obtained by adding (meth)acrylic acid to the terminal or side chain of silicone having a polysiloxane bond in the main chain. Among them, a polycarbonate (meth)acrylate (such as a polycarbonate-based urethane (meth)acrylate), urethane (meth)acrylate, and the like are particularly preferable as the polyfunctional (meth)acrylate oligomer. These oligomers may be used singly or in combination of two or more thereof.

Among the ionizing radiation curable resins described above, it is preferable to use a polycarbonate (meth)acrylate (such as a polycarbonate-based urethane (meth)acrylate), and it is particularly preferable to use a polycarbonate (meth)acrylate (such as a polycarbonate-based urethane (meth)acrylate) in combination with a polyfunctional (meth)acrylate other than the polycarbonate (meth)acrylate from the viewpoint of achieving both excellent scratch resistance and excellent three-dimensional moldability.

The polycarbonate (meth)acrylate is obtained, for example, by converting some or all of hydroxy groups of a polycarbonate polyol into a (meth)acrylate (acrylic acid ester or methacrylic acid ester). This esterification reaction can be carried out by an ordinary esterification reaction. Examples thereof include: 1) a method of condensing a polycarbonate polyol with an acrylic halide or a methacrylic halide in the presence of a base, 2) a method of condensing a polycarbonate polyol with an acrylic anhydride or a methacrylic anhydride in the presence of a catalyst, and 3) a method of condensing a polycarbonate polyol with an acrylic acid or a methacrylic acid in the presence of an acid catalyst.

The polycarbonate polyol is a polymer having a carbonate bond in the polymer main chain and having 2 or more, preferably 2 to 50, more preferably 3 to 50 hydroxy groups at the terminal or side chain. A typical method for producing the polycarbonate polyol is a method using a polycondensation reaction from a diol compound (A), a tri- or higher polyhydric alcohol (B), and a compound (C) serving as a carbonyl component. The diol compound (A) used as a raw material is represented by the general formula HO-R¹-OH. Here, R¹ is a divalent hydrocarbon group having 2 to 20 carbon atoms and may contain an ether bond in the group. Examples thereof include a linear or branched alkylene group, a cyclohexylene group, and a phenylene group.

Specific examples of the diol compound (A) include ethylene glycol, 1,2-propylene glycol, diethylene glycol, dipropylene glycol, triethylene glycol, polyethylene glycol, neopentyl glycol, 1,3-propanediol, 1,4-butanediol, 1,5-pentanediol, 3-methyl-1,5-pentanediol, 1,6-hexanediol, 1,8-octanediol, 1,3-bis(2-hydroxyethoxy)benzene, 1,4-bis(2-hydroxyethoxy)benzene, 1,4-cyclohexanediol, and 1,4-cyclohexanedimethanol. These diols may be used singly or as a mixture of two or more thereof.

Examples of the tri- or higher polyhydric alcohol (B) include alcohols such as trimethylolpropane, trimethylolethane, pentaerythritol, ditrimethylolpropane, dipentaerythritol, glycerol, and sorbitol. Furthermore, alcohols having hydroxy groups obtained by adding one to five equivalents of ethylene oxide, propylene oxide, or other alkylene oxides to the hydroxy groups of these polyhydric alcohols may be used. These polyhydric alcohols may be used singly or as a mixture of two or more thereof.

The compound (C) serving as a carbonyl component is any compound selected from carbonic acid diesters, phosgene, and equivalents thereof. Specific examples thereof include carbonic acid diesters such as dimethyl carbonate, diethyl carbonate, diisopropyl carbonate, diphenyl carbonate, ethylene carbonate, and propylene carbonate, phosgene, and halogenated formic acid esters such as methyl chloroformate, ethyl chloroformate, and phenyl chloroformate. These may be used singly or as a mixture of two or more thereof.

The polycarbonate polyol is synthesized by a polycondensation reaction of the diol compound (A), the tri- or higher polyhydric alcohol (B), and the compound (C) serving as a carbonyl component under common conditions. For example, the charged molar ratio of the diol compound (A) and the polyhydric alcohol (B) is preferably in the range of 50 : 50 to 99 : 1, and the charged molar ratio of the compound (C) serving as a carbonyl component to the diol compound (A) and the polyhydric alcohol (B) is preferably 0.2 to 2 equivalents with respect to hydroxy groups of the diol compound and the polyhydric alcohol.

The number of equivalents (eq./mol) of hydroxy groups present in the polycarbonate polyol after the polycondensation reaction at the above charged ratio is 3 or more, preferably 3 to 50, more preferably 3 to 20 on average in one molecule. Within this range, a necessary amount of (meth)acrylate groups are formed by the esterification reaction described later, and moderate flexibility is imparted to the polycarbonate (meth)acrylate resin. The terminal functional group of the polycarbonate polyol is usually an OH group, but a part thereof may be a carbonate group.

The method for producing the polycarbonate polyol described above is described, for example, in Japanese Patent Laid-open Publication No. S64-1726. The polycarbonate polyol can also be produced by a transesterification reaction of a polycarbonate diol and a tri- or higher polyhydric alcohol as described in Japanese Patent Laid-open Publication No. H3-181517.

The molecular weight of the polycarbonate (meth)acrylate used in the present disclosure is preferably 500 or more, more preferably 1,000 or more, still more preferably 2,000 or more in terms of a weight average molecular weight measured by GPC analysis and converted in terms of standard polystyrene. The upper limit of the weight average molecular weight of the polycarbonate (meth)acrylate is not particularly limited but is preferably 100,000 or less, more preferably 50,000 or less from the viewpoint of controlling the viscosity so as not to be excessively high. It is more preferably 2,000 or more and 50,000 or less, particularly preferably 5,000 to 20,000.

In the ionizing radiation curable resin composition, the polycarbonate (meth)acrylate is preferably used together with a polyfunctional (meth)acrylate other than the polycarbonate (meth)acrylate. The mass ratio of the polycarbonate (meth)acrylate and the polyfunctional (meth)acrylate is more preferably polycarbonate (meth)acrylate : polyfunctional (meth)acrylate = 98 : 2 to 50 : 50. When the mass ratio of the polycarbonate (meth)acrylate to the polyfunctional (meth)acrylate is less than 98 : 2 (that is, when the amount of the polycarbonate (meth)acrylate is 98 mass% or less with respect to the total amount of the two components), the above-mentioned durability and chemical resistance are further improved. On the other hand, when the mass ratio of the polycarbonate (meth)acrylate to the polyfunctional (meth)acrylate is more than 50 : 50 (that is, when the amount of the polycarbonate (meth)acrylate is 50 mass% or more with respect to the total amount of the two components), the three-dimensional moldability is further improved. Preferably, the mass ratio of the polycarbonate (meth)acrylate and the polyfunctional (meth)acrylate is 95 : 5 to 60 : 40.

The polyfunctional (meth)acrylate other than the polycarbonate (meth)acrylate to be used in combination with the polycarbonate (meth)acrylate in the present disclosure is not particularly limited as long as it is a bi- or higher functional (meth)acrylate. Here, the term "bifunctional" means that two ethylenic unsaturated bonds f (meth)acryloyl groups} are included in the molecule. The number of functional groups is preferably about two to six.

The polyfunctional (meth)acrylate to be used in combination with the polycarbonate (meth)acrylate may be either an oligomer or a monomer, but from the viewpoint of achieving both excellent scratch resistance and excellent three-dimensional moldability, a polyfunctional (meth)acrylate oligomer is preferable.

Examples of the polyfunctional (meth)acrylate oligomer to be used in combination with the polycarbonate (meth)acrylate include urethane (meth)acrylate-based oligomers, epoxy (meth)acrylate-based oligomers, polyester (meth)acrylate-based oligomers, and polyether (meth)acrylate-based oligomers. The urethane (meth)acrylate-based oligomer can be obtained, for example, by esterifying a polyurethane oligomer with (meth)acrylic acid, the polyurethane oligomer being obtained by a reaction of a polyether polyol or a polyester polyol with a polyisocyanate. The epoxy (meth)acrylate-based oligomer can be obtained, for example, by reacting (meth)acrylic acid with an oxirane ring of a bisphenol-type epoxy resin or novolac-type epoxy resin having a relatively low molecular weight to perform esterification. A carboxyl-modified epoxy (meth)acrylate oligomer obtained by partially modifying the epoxy (meth)acrylate-based oligomer with a dibasic carboxylic anhydride can also be used. The polyester (meth)acrylate-based oligomer can be obtained, for example, by esterifying, with (meth)acrylic acid, hydroxy groups of a polyester oligomer having hydroxy groups at both terminals obtained by condensation of a polyvalent carboxylic acid and a polyhydric alcohol, or by esterifying, with (meth)acrylic acid, hydroxy groups at terminals of an oligomer obtained by adding an alkylene oxide to a polyvalent carboxylic acid. The polyether (meth)acrylate-based oligomer can be obtained by esterifying hydroxy groups of a polyether polyol with (meth)acrylic acid.

Furthermore, examples of other polyfunctional (meth)acrylate oligomers to be used in combination with the polycarbonate (meth)acrylate include a highly hydrophobic polybutadiene (meth)acrylate-based oligomer having a (meth)acrylate group in a side chain of a polybutadiene oligomer, a silicone (meth)acrylate-based oligomer having a polysiloxane bond in a main chain, and an aminoplast resin (meth)acrylate-based oligomer obtained by modifying an aminoplast resin having many reactive groups in a small molecule.

Specific examples of the polyfunctional (meth)acrylate monomer used in combination with the polycarbonate (meth)acrylate include ethylene glycol di(meth)acrylate, propylene glycol di(meth)acrylate, 1,4-butanediol di(meth)acrylate, 1,6-hexanediol di(meth)acrylate, neopentyl glycol di(meth)acrylate, polyethylene glycol di(meth)acrylate, hydroxypivalic acid neopentyl glycol di(meth)acrylate, dicyclopentanyl di(meth)acrylate, caprolactone-modified dicyclopentenyl di(meth)acrylate, ethylene oxide-modified phosphate di(meth)acrylate, allylated cyclohexyl di(meth)acrylate, isocyanurate di(meth)acrylate, trimethylolpropane tri(meth)acrylate, ethylene oxide-modified trimethylolpropane tri(meth)acrylate, dipentaerythritol tri(meth)acrylate, propionic acid-modified dipentaerythritol tri(meth)acrylate, pentaerythritol tri(meth)acrylate, propylene oxide-modified trimethylolpropane tri(meth)acrylate, tris(acryloxyethyl) isocyanurate, propionic acid-modified dipentaerythritol penta(meth)acrylate, dipentaerythritol hexa(meth)acrylate, ethylene oxide-modified dipentaerythritol hexa(meth)acrylate, and caprolactone-modified dipentaerythritol hexa(meth)acrylate. The polyfunctional (meth)acrylate oligomer and the polyfunctional (meth)acrylate monomer described above may be used singly or may be used in combination of two or more thereof.

In the present disclosure, a monofunctional (meth)acrylate can be appropriately used in combination with the polyfunctional (meth)acrylate for the purpose of, for example, reducing the viscosity of the polyfunctional (meth)acrylate as long as the object of the present disclosure is not impaired. Examples of the monofunctional (meth)acrylate include methyl (meth)acrylate, ethyl (meth)acrylate, propyl (meth)acrylate, butyl (meth)acrylate, pentyl (meth)acrylate, hexyl (meth)acrylate, cyclohexyl (meth)acrylate, 2-ethylhexyl (meth)acrylate, lauryl (meth)acrylate, stearyl (meth)acrylate, and isobornyl (meth)acrylate. These monofunctional (meth)acrylates may be used singly or in combination of two or more kinds thereof.

The content of the polycarbonate (meth)acrylate in the ionizing radiation curable resin composition constituting the protective layer 5 is not particularly limited but is preferably about 98 to 50 mass%, more preferably about 90 to 65 mass% in the viewpoint of achieving both excellent scratch resistance and excellent three-dimensional moldability.

In the case where the protective layer 5 is formed using an ionizing radiation curable resin, the protective layer 5 is formed, for example, by preparing an ionizing radiation curable resin composition, applying the ionizing radiation curable resin composition, and crosslinking and curing the ionizing radiation curable resin composition. The viscosity of the ionizing radiation curable resin composition may be any viscosity that enables formation of an uncured resin layer by a coating method described later.

In the present disclosure, a prepared coating liquid is applied by a known method such as gravure coating, bar coating, roll coating, reverse roll coating, and comma coating, preferably gravure coating, so as to have a desired thickness to form an uncured resin layer.

The uncured resin layer thus formed is irradiated with an ionizing radiation such as an electron beam and an ultraviolet ray to cure the uncured resin layer, thereby forming the protective layer 5. Here, in the case where an electron beam is used as the ionizing radiation, the acceleration voltage thereof can be appropriately selected according to the resin to be used and the thickness of the layer, and the acceleration voltage is normally about 70 to 300 kV.

In the irradiation of the electron beam, since the transmission capability increases as the acceleration voltage increases, in the case where a resin that is easily deteriorated by electron beam irradiation is used under the protective layer 5, the acceleration voltage is selected so that the transmission depth of the electron beam is substantially equal to the thickness of the protective layer 5. In the case where the release layer 3 formed on the transferring base material layer and the protective layer 5 are cured together with the electron beam, the acceleration voltage is selected so that the transmission depth of the electron beam is substantially equal to the total thickness of the release layer 3 and the protective layer 5. As a result, it is possible to suppress the irradiation of the transferring base material layer positioned under the release layer 3 with an excessive electron beam, and it is possible to minimize the deterioration of the transferring base material layer due to the excessive electron beam.

The irradiation dose is an amount at which the crosslinking density of the protective layer 5 is a sufficient value, and is preferably 30 to 300 kGy (3 to 30 Mrad), more preferably 30 to 100 kGy (3 to 10 Mrad). By setting the irradiation dose within such a range, it is possible to suppress deterioration of the layer located under the protective layer 5 due to the ionizing radiation having been transmitted through the protective layer 5. The above example is a case where the number of functional groups of the polyfunctional (meth)acrylate is two, and an appropriate irradiation dose is required depending on the number of functional groups.

Furthermore, the electron beam source is not particularly limited, and various electron beam accelerators such as Cockcroft-Walton type, Van de Graaff type, resonant transformer type, insulated core transformer type, linear type, Dynamitron type, and high-frequency type accelerators can be used.

In the case where an ultraviolet ray is used as the ionizing radiation, a light ray including an ultraviolet ray having a wavelength of 190 to 380 nm may be emitted. The ultraviolet light source is not particularly limited, and examples thereof include a high pressure mercury lamp, a low pressure mercury lamp, a metal halide lamp, a carbon arc lamp, and an ultraviolet light emitting diode (LED-UV).

The thickness of the protective layer 5 is not particularly limited but is preferably about 1 to 30 µm, more preferably about 2 to 20 µm, still more preferably about 3 to 15 µm. When the thickness is within such a range, the laminated body can effectively exhibit excellent scratch resistance and excellent three-dimensional moldability. In the case where the protective layer 5 is formed of an ionizing radiation curable resin, the ionizing radiation curable resin composition can be uniformly irradiated with the ionizing radiation, so that uniform curing can be performed, which is economically advantageous.

### [Primer Layer 6]

The primer layer 6 is a layer provided on the transfer layer 9 as necessary for the purpose of, for example, improving adhesion of the protective layer 5. The primer layer 6 is preferably provided so as to be adjacent to the protective layer 5. The primer layer 6 can be formed of a primer layer forming resin composition.

The resin used in the primer layer forming resin composition is not particularly limited, and examples thereof include a polyol and/or a cured product thereof, a urethane resin, an acrylic resin, a (meth)acrylic-urethane copolymer resin, a polyester resin, and a butyral resin. Among these resins, preferable examples include a polyol and/or a cured product thereof, a urethane resin, an acrylic resin, and an acrylic urethane resin are preferable. These resins may be used singly or in combination of two or more thereof.

In the present disclosure, the primer layer 6 is preferably formed of a resin composition containing a polyol and a urethane resin. The polyol is only required to be a compound having two or more hydroxy groups in the molecule, and specific examples thereof include polyester polyols, polyethylene glycol, polypropylene glycol, acrylic polyols, and polyether polyols, preferably acrylic polyols.

In the case where a polyol and a urethane resin are used for forming the primer layer 6, the mass ratio thereof (polyol : urethane resin) is preferably about 5 : 5 to 9.5 : 0.5, more preferably about 7 : 3 to 9 : 1.

Examples of the cured product of the polyol include a urethane resin. As the urethane resin, polyurethane containing a polyol (polyhydric alcohol) as a main component and an isocyanate as a crosslinking agent (curing agent) can be used.

Specific examples of the isocyanate include a polyvalent isocyanate having two or more isocyanate groups in the molecule; an aromatic isocyanate such as 4,4-diphenylmethane diisocyanate; an aliphatic (or alicyclic) isocyanate such as hexamethylene diisocyanate, isophorone diisocyanate, hydrogenated tolylene diisocyanate, and hydrogenated diphenylmethane diisocyanate. In the case where the isocyanate is used as a curing agent, the content of the isocyanate in the primer layer forming resin composition is not particularly limited but is preferably 3 to 45 parts by mass, more preferably 3 to 25 parts by mass with respect to 100 parts by mass of the polyol from the viewpoint of adhesion and from the viewpoint of printing appropriateness when the later-described decorative layer 7 and the like are laminated.

Among the above urethane resins, a combination of an acrylic polyol or a polyester polyol as a polyol and hexamethylene diisocyanate or 4,4-diphenylmethane diisocyanate as a crosslinking agent is preferable, and a combination of an acrylic polyol and hexamethylene diisocyanate is more preferable, from the viewpoint of improving adhesion after crosslinking and the like.

The acrylic resin is not particularly limited, and examples thereof include a homopolymer of a (meth)acrylic acid ester, a copolymer of two or more different (meth)acrylic acid ester monomers, and a copolymer of a (meth)acrylic acid ester and another monomer. More specific examples of the (meth)acrylic resin include a (meth)acrylic acid ester such as poly(methyl (meth)acrylate), poly(ethyl (meth)acrylate), poly(propyl (meth)acrylate), poly(butyl (meth)acrylate), a methyl (meth)acrylate-butyl (meth)acrylate copolymer, an ethyl (meth)acrylate-butyl (meth)acrylate copolymer, an ethylene-methyl (meth)acrylate copolymer, and a styrene-methyl (meth)acrylate copolymer.

The acrylic urethane resin is not particularly limited, and examples thereof include an acrylic-urethane block copolymer, specifically an acrylic-polyester urethane block copolymer. The ratio of acryl to urethane in the acrylic-urethane block copolymer is not particularly limited, but for example, the acryl/urethane ratio (mass ratio) is 9/1 to 1/9, preferably 8/2 to 2/8.

The thickness of the primer layer 6 is not particularly limited but is, for example, about 0.1 to 10 µm, preferably about 1 to 10 µm (that is, the coating amount is, for example, about 0.1 to 10 g/m², preferably 1 to 10 g/m²). When the primer layer 6 satisfies such a thickness, adhesion of the protective layer 5 can be effectively enhanced.

Various additives can be blended in the composition constituting the primer layer 6 according to desired physical properties to be imparted. Examples of the additives include weather resistance improvers such as ultraviolet absorbents and light stabilizers, abrasion resistance improvers, polymerization inhibitors, crosslinkers, infrared absorbents, antistatic agents, bondability improvers, leveling agents, thixotropy imparting agents, coupling agents, plasticizers, antifoaming agents, fillers, solvents, coloring agents, matting agents, and the like. These additives can be appropriately selected from those commonly used, and examples of the matting agent include silica particles and aluminum hydroxide particles. As the ultraviolet absorbent or the light stabilizer, a reactive ultraviolet absorbent or light stabilizer having a polymerizable group such as a (meth)acryloyl group in the molecule can also be used.

The primer layer 6 is formed by a normal coating method such as gravure coating, reverse gravure coating, offset gravure coating, spinner coating, roll coating, reverse roll coating, kiss coating, wheeler coating, dip coating, whole-surface coating by silk screen, wire bar coating, flow coating, comma coating, pour coating, brush coating, and spray coating, or a transfer coating method, using the primer layer forming resin composition. Here, the transfer coating method is a method in which a coating film of the primer layer 6 or the adhesive layer is formed on a thin sheet (film base material layer), and then the surface of a target layer in the laminated body is coated with the coating film.

When the primer layer 6 is formed on the surface of the protective layer 5, the primer layer 6 may be formed on the protective layer 5 after curing. After the primer layer 6 is formed by laminating a layer formed of the primer layer forming composition on a layer of the ionizing radiation curable resin composition constituting the protective layer 5, the layer formed of the ionizing radiation curable resin may be irradiated with an ionizing radiation to cure the layer formed of the ionizing radiation curable resin to form the protective layer 5.

### [Decorative Layer 7]

The decorative layer 7 is a layer provided as necessary in order to impart decorativeness to the resin molded article. The decorative layer 7 is usually composed of a pattern layer and/or a masking layer. Here, the pattern layer is a layer provided to express a pattern, a character, and the like and a patterned picture, and the masking layer is a layer that is usually a whole-surface layer and is provided to mask coloring of a resin to be molded or the like. The masking layer may be provided inside the pattern layer in order to make the picture of the pattern layer look better, or the masking layer alone may constitute the decorative layer 7.

The picture of the pattern layer is not particularly limited, and examples thereof include pictures including a wood grain pattern, a stone grain pattern, a cloth pattern, a sand grain pattern, a geometric pattern, a character, and the like.

The decorative layer 7 is formed using a printing ink containing a coloring agent, a binder resin, and a solvent or a dispersion medium.

The coloring agent of the printing ink used for forming the decorative layer 7 is not particularly limited, and examples thereof include a metallic pigment composed of scaly foil powder of a metal such as aluminum, chromium, nickel, tin, titanium, iron phosphide, copper, gold, silver, and brass, an alloy, or a metal compound; a pearlescent (pearl) pigment composed of foil powder such as micaceous iron oxide, titanium-dioxide-coated mica, titanium-dioxide-coated bismuth oxychloride, bismuth oxychloride, titanium-dioxide-coated talc, fish scale foil, colored titanium-dioxide-coated mica, and basic lead carbonate; a fluorescent pigment such as strontium aluminate, calcium aluminate, barium aluminate, zinc sulfide, and calcium sulfide; a white inorganic pigment such as titanium dioxide, zinc white, and antimony trioxide; an inorganic pigment such as zinc white, rouge, vermilion, ultramarine, cobalt blue, titanium yellow, chrome yellow, and carbon black; and an organic pigment (including a dye) such as isoindolinone yellow, Hansa yellow A, quinacridone red, permanent red 4R, phthalocyanine blue, indanthrene blue RS, and aniline black. These coloring agents may be used singly or in combination of two or more thereof.

The binder resin of the printing ink used for forming the decorative layer 7 is not particularly limited, and examples thereof include acrylic-based resins, styrenebased resins, polyester-based resins, urethane-based resins, chlorinated polyolefin-based resins, vinyl chloride-vinyl acetate copolymer-based resins, polyvinyl butyral resins, alkyd-based resins, petroleum-based resins, ketone resins, epoxy-based resins, melamine-based resins, fluorine-based resins, silicone-based resins, cellulose derivatives, and rubber-based resins. These binder resins may be used singly or in combination of two or more thereof.

The solvent or dispersion medium of the printing ink to be used for formation of the decorative layer 7 is not particularly limited, and examples thereof include petroleum-based organic solvents such as hexane, heptane, octane, toluene, xylene, ethylbenzene, cyclohexane, and methylcyclohexane; ester-based organic solvents such as ethyl acetate, butyl acetate, 2-methoxyethyl acetate, and 2-ethoxyethyl acetate; alcohol-based organic solvents such as methyl alcohol, ethyl alcohol, n-propyl alcohol, isopropyl alcohol, isobutyl alcohol, ethylene glycol, and propylene glycol; ketone-based organic solvents such as acetone, methyl ethyl ketone, methyl isobutyl ketone, and cyclohexanone; ether-based organic solvents such as diethyl ether, dioxane, and tetrahydrofuran; chlorine-based organic solvents such as dichloromethane, carbon tetrachloride, trichloroethylene, and tetrachloroethylene; and water. These solvents or dispersion media may be used singly or in combination of two or more thereof.

The printing ink used for forming the decorative layer 7 may contain an antisettling agent, a curing catalyst, an ultraviolet absorbent, an antioxidant, a leveling agent, a thickener, an antifoaming agent, a slipping agent, and the like as necessary.

The decorative layer 7 can be formed on an adjacent layer such as the protective layer 5 and the primer layer 6 by a known printing method such as gravure printing, flexographic printing, silk screen printing, and offset printing. In the case where the decorative layer 7 is a combination of the pattern layer and the masking layer, it is sufficient to laminate and dry one layer and then laminate and dry the other layer.

The thickness of the decorative layer 7 is not particularly limited and is, for example, 1 to 40 µm, preferably 3 to 30 µm.

The decorative layer 7 may be a thin metal film layer. Examples of the metal constituting the thin metal film layer include tin, indium, chromium, aluminum, nickel, copper, silver, gold, platinum, zinc, and an alloy containing at least one of these metals. The method for forming the thin metal film layer is not particularly limited, and examples thereof include a vapor deposition method such as a vacuum vapor deposition method, a sputtering method, and an ion plating method using the above-described metal. In addition, in order to improve adhesion to an adjacent layer, a primer layer containing a known resin may be provided on the front surface or the back surface of the thin metal film layer.

### [Adhesive Layer 8]

The adhesive layer 8 is a layer provided on the back surface (molded resin layer 12 side) of the decorative layer 7 or the like as necessary for the purpose of, for example, improving adhesion between the transfer layer 9 and the molded resin layer 12. The resin for forming the adhesive layer 8 is not particularly limited as long as it can improve adhesion and bondability between these layers, and for example, a thermoplastic resin or a thermosetting resin is used. Examples of the thermoplastic resin include an acrylic resin, an acrylic-modified polyolefin resin, a chlorinated polyolefin resin, a vinyl chloride-vinyl acetate copolymer, a thermoplastic urethane resin, a thermoplastic polyester resin, a polyamide resin, and a rubber-based resin. The thermoplastic resins may be used singly or in combination of two or more thereof. Examples of the thermosetting resin include a urethane resin and an epoxy resin. The thermosetting resins may be used singly or in combination of two or more thereof.

The adhesive layer 8 is not a necessary layer but is preferably provided in the case where it is assumed that the transfer sheet in the present disclosure is applied to a decoration method of bonding onto a resin molded body prepared in advance, such as a vacuum press-bonding method described later. In the case of use in the vacuum press-bonding method, it is preferable to form the adhesive layer 8 using, among the various resins described above, a resin commonly used as a resin that exhibits bondability when subjected to pressurization or heating.

The thickness of the adhesive layer 8 is not particularly limited but is, for example, about 0.1 to 30 µm, preferably about 0.5 to 20 µm, more preferably about 1 to 8 µm.

### 2. Resin Molded Article and Method for Producing the Same

The resin molded article according to the first aspect in the present disclosure is formed by integrating the transfer sheet according to the first aspect in the present disclosure with the molded resin layer. Specifically, by transferring the molded resin layer 12 to the side opposite to the support of the transfer sheet, a resin molded article 21 with the transferring base material in which at least the molded resin layer 12, the transfer layer 9, the transferring base material 1, and the linear concave portion shaping layer 2 are laminated in this order is obtained (see, for example, Fig. 8). Next, the support is peeled off from the resin molded article 21 with the transferring base material to provide the resin molded article according to the first aspect in the present disclosure in which at least the molded resin layer 12 and the transfer layer 9 are laminated (see, for example, Fig. 9).

In the resin molded article according to the first aspect in the present disclosure, the ratio (shaping rate) (%) of the depth (µm) of the concave portion (concave portion formed by embedding the linear concave portion shaping layer on the transfer layer side by transfer) formed in the transfer layer (such as the protective layer) of the resin molded article to the height (µm) of the linear concave portion shaping layer of the transfer sheet 10 is preferably 75% or more, more preferably 80% or more, still more preferably 85% or more. In the case where the height (µm) of the linear concave portion shaping layer of the transfer sheet 10 according to the first aspect is equal to the depth (µm) of the concave portion formed in the transfer layer (such as the protective layer) of the resin molded article, the shaping rate is 100%.

The resin molded article according to the first aspect in the present disclosure can be produced by a production method including the following steps.

The transfer step of disposing the transfer sheet in the mold (Fig. 10(a)), injecting the fluidized resin into the mold from the transfer layer side (Fig. 10(b)), and solidifying the resin to integrate the transfer sheet with the outer surface of the resin molding simultaneously with injection molding (Fig. 10(c)).

In the transfer step, the linear concave portion shaping layer provided in the transfer sheet is embedded in the transfer base material layer to form the linear concave portion 11 corresponding to the shape of the linear concave portion shaping layer in the surface of the transfer layer.

The transferring base material is peeled off from the resin molded article 21 with the transferring base material obtained in the transfer step to provide the resin molded article (Fig. 9) in which linear concave portions are formed in the surface of the transfer layer.

The resin molded article according to the second aspect in the present disclosure is formed by integrating the transfer sheet according to the second aspect in the present disclosure with the molded resin layer. Specifically, by transferring the molded resin layer 12 to the side opposite to the support of the transfer sheet, a resin molded article 21 with the transferring base material in which at least the molded resin layer 12, the transfer layer 9, the transferring base material 1, and the concave portion shaping layer 2a are laminated in this order is obtained (see, for example, Fig. 19). Next, the support is peeled off from the resin molded article 21 with the transferring base material to provide the resin molded article in the present disclosure in which at least the molded resin layer 12 and the transfer layer 9 are laminated (see, for example, Fig. 20).

In the resin molded article according to the second aspect in the present disclosure, the ratio (shaping rate) (%) of the depth (µm) of the concave portion (concave portion formed by embedding the concave portion shaping layer on the transfer layer side by transfer) formed in the transfer layer (such as the protective layer) of the resin molded article to the height (µm) of the concave portion shaping layer of the transfer sheet 10 is preferably 70% or more, more preferably 75% or more, still more preferably 80% or more. In the case where the height (µm) of the concave portion shaping layer of the transfer sheet 10 according to the second aspect is equal to the depth (µm) of the concave portion formed in the transfer layer (such as the protective layer) of the resin molded article, the shaping rate is 100%.

In the present disclosure, in the case where the transfer sheet is applied to, for example, an injection molding simultaneous transfer decoration method, examples of the method for producing a resin molded article of the present disclosure include a method including the following steps (1) to (5):
(1) a step of first heating the transfer sheet from the transfer layer 9 side with a heating platen with the transfer layer 9 side (a side opposite to the linear concave portion shaping layer 2 side of the first aspect and a side opposite to the concave portion shaping layer 2a side of the second aspect) of the transfer sheet for transfer facing the inside of the mold;
(2) a step of preliminarily molding (vacuum molding) the transfer sheet so as to follow the shape of the inside of the mold to bring the transfer sheet into close contact with the inner surface of the mold and clamping the mold;
(3) a step of injecting the resin into the mold;
(4) a step of taking out the resin molded article (resin molded article with the transferring base material) from the mold after cooling the injected resin; and
(5) a step of peeling off the transferring base material (together with the support) from the resin molded article.

In both steps (1) and (2) in the present disclosure, the temperature at which the transfer sheet is heated is preferably in the range of a temperature equal to or higher than the vicinity of the glass transition temperature of the transferring base material 1 and lower than the melting temperature (or melting point). It is usually more preferable to perform the steps at a temperature near the glass transition temperature. The vicinity of the glass transition temperature refers to the range of about ±5°C of the glass transition temperature and is generally about 70 to 130°C in the case where a polyester film suitable as the transferring base material 1 is used. In the case where a mold having a less complicated shape is used, the step of heating the transfer sheet and the step of preliminarily molding the transfer sheet may be omitted, and the transfer sheet may be molded into the shape of the mold by the heat and pressure of the resin to be injected in step (3) described later.

In both steps (3), a molding resin to be described later is melted and injected into the cavity to integrate the transfer sheet with the molding resin. In the case where the molding resin is a thermoplastic resin, the resin is brought into a fluidized state by heating and melting, and in the case where the molding resin is a thermosetting resin, an uncured liquid composition is injected in a fluidized state at room temperature or after appropriately heated, then cooled, and solidified. As a result, the transfer sheet is integrated with and stuck on the formed resin molded body to form the resin molded article with the transferring base material. The heating temperature of the molding resin is generally about 180 to 320°C although it depends on the type of the molding resin.

The resin molded article with the transferring base material obtained as described above is cooled in step (4) and then taken out from the mold, and then the support is peeled off from the protective layer 5 in step (5) to provide the resin molded article. The step of peeling the support from the protective layer 5 may be performed simultaneously with the step of taking out the decorative resin molded article from the mold. That is, step (5) may be included in step (4).

Furthermore, the resin molded article can also be produced by a vacuum press-bonding method. In the vacuum press-bonding method, first, in a vacuum press-bonding machine including a first vacuum chamber located on the upper side and a second vacuum chamber located on the lower side, the transfer sheet and the resin molded body of the present disclosure are installed in the vacuum press-bonding machine such that the transfer sheet is on the first vacuum chamber side and the resin molded body is on the second vacuum chamber side and such that the side of the transfer sheet on which the molded resin layer 12 is laminated faces the resin molded body side, and a vacuum is created in the two vacuum chambers. The resin molded body is installed on a lift stage that is provided on the second vacuum chamber side and is vertically movable. Next, the first vacuum chamber is pressurized, the molded body is pressed against the transfer sheet using the lift stage, and the transfer sheet is bonded to the surface of the resin molded body while being stretched using a pressure difference between the two vacuum chambers. Finally, the two vacuum chambers are opened to atmospheric pressure, the support is peeled off, and an excess portion of the transfer sheet is trimmed as necessary, whereby the resin molded article in the present disclosure can be obtained.

The vacuum press-bonding method preferably includes a step of heating the transfer sheet in order to soften the transfer sheet to improve moldability before the step of pressing the molded body against the transfer sheet. The vacuum press-bonding method including this step may be particularly referred to as a vacuum heating press-bonding method. The heating temperature in this step may be appropriately selected depending on the type of resin constituting the transfer sheet, the thickness of the transfer sheet, and the like, but for example, in the case where a polyester resin film or an acrylic resin film is used as the transferring base material 1, the heating temperature can be usually set to about 60 to 200°C.

In the resin molded article in the present disclosure, the molded resin layer 12 is formed by selecting a resin according to the application. The molding resin constituting the molded resin layer 12 may be a thermoplastic resin or a thermosetting resin.

Examples of the thermoplastic resin include a polyolefin-based resin such as polyethylene and polypropylene, an ABS resin, a styrene resin, a polycarbonate resin, an acrylic resin, and a vinyl chloride-based resin. These thermoplastic resins may be used singly or in combination of two or more thereof.

Examples of the thermosetting resin include a urethane resin and an epoxy resin. These thermosetting resins may be used singly or in combination of two or more thereof.

In the resin molded article with the transferring base material, since the transferring base material serves as a protective sheet for the resin molded article, the resin molded article with the transferring base material after the production may be stored as it is without peeling off, and the support may be peeled off at the time of use. By using the product in such an aspect, it is possible to prevent the resin molded article from being scratched due to rubbing or the like during transportation.

The resin molded article in the present disclosure can be used as, for example, an interior material or an exterior material of a vehicle such as an automobile; a fitting such as a window frame and a door frame; an interior material for a building such as a wall, a floor, and a ceiling; a housing of a home electric appliance such as a television receiver and an air conditioner; and a container.

### EXAMPLES

The present disclosure will be described below in detail with reference to examples and comparative examples. However, the present disclosure is not limited to the examples.

### <Production of Transfer Sheet According to First Aspect>

As the transferring base material, a polyethylene terephthalate film (thickness: 75 µm) having an easy-adhesive agent layer formed on one surface thereof was used. An antiblocking layer (acrylic resin having a thickness of 1.5 µm containing 1% of silica particles) was applied to a surface of the polyethylene terephthalate film opposite to the surface on which the easy-adhesive agent layer was formed. On the surface of the easy-adhesive agent layer of the polyethylene terephthalate film, a coating liquid containing a melamine-based resin as a main component was printed by gravure printing to form a release layer (thickness: 1 µm). Next, an ionizing radiation curable resin composition was applied onto the release layer with a bar coater so that the thickness after curing was 2 µm (that is, the thickness of the protective layer was 2 µm) to form a coating film for forming a protective layer. The ionizing radiation curable resin composition was urethane acrylate.

Next, the coating film was irradiated with an electron beam at an accelerating voltage of 165 kV and an irradiation dose of 50 kGy (5 Mrad) to cure the coating film for forming a protective layer, thereby forming a protective layer. A resin composition (acrylic polyol) for forming a primer layer was applied onto the protective layer by gravure printing to form a primer layer (thickness: 1.5 µm). Further, on the primer layer, a decorative layer (thickness: 5 µm) having a whole black single color was formed by gravure printing using a black ink composition for forming a decorative layer containing a binder resin (50 mass% of an acrylic resin, 50 mass% of a vinyl chloride-vinyl acetate-based copolymer resin). Further, an adhesive layer (thickness: 1.5 µm) was formed on the decorative layer by gravure printing using a resin composition for forming an adhesive layer containing an acrylic-based resin (softening temperature: 125°C) to provide a laminated body in which the antiblocking layer/the transferring base material/the release layer/the protective layer/the primer layer/the decorative layer/the adhesive layer were laminated in this order. Further, a linear concave portion shaping layer having a height, a line width, a line length, and an aspect ratio shown in Table 1 was formed on the antiblocking layer in a longitudinal direction and a lateral direction (number of lines of the pattern shown in Table 1) at intervals shown in Table 1 using an ink jet printer. The resin composition used for formation of the linear concave portion shaping layer was urethane acrylate to which a photopolymerization initiator was added, and was cured with an ultraviolet irradiation device attached to the inkjet printer.

### <Production of Resin Molded Article According to First Aspect>

Each of the obtained transfer sheets was placed in a mold, heated at 350°C for 7 seconds with an infrared heater, and preliminarily molded so as to follow the shape (plate shape) in the mold by vacuum molding, and the mold was clamped (maximum stretch ratio: 50%). Thereafter, a resin (ABS resin) to be injected was injected into the cavity of the mold, the transfer sheet and the injected resin were integrally molded, and the product was taken out from the mold simultaneously with peeling off and removal of the support (the transferring base material in which the linear concave portion shaping layer was embedded, the antiblocking layer, and the release layer) to provide a resin molded article.

### <Measurement of Shaping Rate>

For the surface on the linear concave portion shaping layer side of the transfer sheet according to the first aspect, the uneven shape was measured with a shape analysis laser microscope "VK-X1000" manufactured by KEYENCE CORPORATION, and the height, line width, and interval of the linear concave portion shaping layer were measured. In addition, the surface of the protective layer obtained by peeling off the transferring base material of the resin molded article was also measured in the same manner, and the depth of the concave portion formed in the protective layer was measured. The ratio of the depth (µm) of the concave portion formed in the protective layer of the resin molded article to the height (µm) of the linear concave portion shaping layer of the transfer sheet was calculated as a shaping rate (%). The results are shown in Table 1.

**[Table 1]**

| | Linear concave portion shaping layer | | | | | | | Resin molded article |
|---|---|---|---|---|---|---|---|---|
| | Height (µm) | Line width (µm) | Interval (µm) | Interval (µm)/ line width (µm) | Line length (µm) | Aspect ratio Line length: line width | Number of lines of pattern | Shaping rate (%) Depth of concave portion formed (µm)/ height of linear concave portion shaping layer (µm) |
| Example 1A | 34 | 300 | 400 | 1.3 | 3000 | 10:1 | 4 | 88 |
| Example 2A | 23 | 300 | 300 | 1.0 | 3000 | 10:1 | 5 | 96 |
| Example 3A | 37 | 300 | 200 | 0.7 | 3000 | 10:1 | 6 | 82 |
| Example 4A | 32 | 200 | 400 | 2.0 | 3000 | 15:1 | 5 | 78 |
| Example 5A | 31 | 200 | 300 | 1.5 | 3000 | 15:1 | 6 | 81 |
| Example 6A | 37 | 400 | 500 | 1.3 | 3000 | 7.5:1 | 3 | 95 |
| Example 7A | 36 | 400 | 400 | 1.0 | 3000 | 7.5:1 | 4 | 99 |
| Comparative Example 1A | 24 | 100 | 400 | 4.0 | 3000 | 30:1 | 6 | 66 |
| Comparative Example 2A | 22 | 100 | 300 | 3.0 | 3000 | 30:1 | 8 | 61 |
| Comparative Example 3A | 24 | 100 | 200 | 2.0 | 3000 | 30:1 | 10 | 41 |
| Comparative Example 4A | 19 | 80 | 160 | 2.0 | 3000 | 37.5:1 | 13 | 27 |
| Comparative Example 5A | 13 | 60 | 120 | 2.0 | 3000 | 50:1 | 17 | 36 |

### <Production of Transfer Sheet According to Second Aspect>

As the transferring base material, a polyethylene terephthalate film (thickness: 75 µm) having an easy-adhesive agent layer formed on one surface thereof was used. An antiblocking layer (acrylic resin having a thickness of 1.5 µm containing 1% of silica particles) was applied to a surface of the polyethylene terephthalate film opposite to the surface on which the easy-adhesive agent layer was formed. On the surface of the easy-adhesive agent layer of the polyethylene terephthalate film, a coating liquid containing a melamine-based resin as a main component was printed by gravure printing to form a release layer (thickness: 1 µm). Next, an ionizing radiation curable resin composition was applied onto the release layer with a bar coater so that the thickness after curing was 2 µm (that is, the thickness of the protective layer was 2 µm) to form a coating film for forming a protective layer. The ionizing radiation curable resin composition was urethane acrylate.

Next, the coating film was irradiated with an electron beam at an accelerating voltage of 165 kV and an irradiation dose of 50 kGy (5 Mrad) to cure the coating film for forming a protective layer, thereby forming a protective layer. A resin composition (acrylic polyol) for forming a primer layer was applied onto the protective layer by gravure printing to form a primer layer (thickness: 1.5 µm). Further, on the primer layer, a decorative layer (thickness: 5 µm) having a whole black single color was formed by gravure printing using a black ink composition for forming a decorative layer containing a binder resin (50 mass% of an acrylic resin, 50 mass% of a vinyl chloride-vinyl acetate-based copolymer resin). Further, an adhesive layer (thickness: 1.5 µm) was formed on the decorative layer by gravure printing using a resin composition for forming an adhesive layer containing an acrylic-based resin (softening temperature: 125°C) to provide a laminated body in which the antiblocking layer/the transferring base material/the release layer/the protective layer/the primer layer/the decorative layer/the adhesive layer were laminated in this order. Further, a concave portion shaping layer (the shape is a regular hexagon in a plan view and is a shape in which hexagonal prisms are stacked in multiple tiers. The number of tiers, overall height, height of each tier, width of each tier (distance from end part of each tier to upper tier (see Fig. 13))) described in Table 1 was formed on the antiblocking layer in a matrix using an ink jet printer. The resin composition used for formation of the concave portion shaping layer was urethane acrylate to which a photopolymerization initiator was added, and was cured with an ultraviolet irradiation device attached to the inkjet printer.

### <Production of Resin Molded Article According to Second Aspect>

Each of the obtained transfer sheets was placed in a mold, heated at 350°C for 7 seconds with an infrared heater, and preliminarily molded so as to follow the shape (plate shape) in the mold by vacuum molding, and the mold was clamped (maximum stretch ratio: 50%). Thereafter, a resin (ABS resin) to be injected was injected into the cavity of the mold, the transfer sheet and the injected resin were integrally molded, and the product was taken out from the mold simultaneously with peeling off and removal of the support (the transferring base material in which the concave portion shaping layer was embedded, the antiblocking layer, and the release layer) to provide a resin molded article.

### <Measurement of Shaping Rate>

For the surface on the concave portion shaping layer side of the transfer sheet according to the second aspect, the uneven shape was measured with a shape analysis laser microscope "VK-X1000" manufactured by KEYENCE CORPORATION, and the overall height H, height h of each tier, and width w of each tier of the concave portion shaping layer were measured. In addition, the surface of the protective layer obtained by peeling off the transferring base material of the resin molded article was also measured in the same manner, and the depth of the concave portion formed in the protective layer was measured. The ratio of the depth (µm) of the concave portion formed in the protective layer of the resin molded article to the overall height H (µm) of the concave portion shaping layer of the transfer sheet was calculated as a shaping rate (%). The results are shown in Table 2.

### <Shape of Each Concave Portion Formed on Surface of Resin Molded Article>

The shape of each concave portion formed in the surface of the obtained resin molded article was observed using a shape analysis laser microscope "VK-X1000" manufactured by KEYENCE CORPORATION. The results are shown in Table 2.

**[Table 2]**

| | Concave portion shaping layer | | | | | Resin molded article | |
|---|---|---|---|---|---|---|---|
| | Shape in plan view | Number of tiers | Overall height H (µm) | Height h of each tier (µm) | Width w of each tier (µm) | Shaping rate (%) Depth of concave portion formed (µm)/ height of linear concave portion shaping layer (µm) | Shape and number of tiers of concave portion formed |
| Example 1B | Regular hexagon | 3 | 60 | 20 | 869 | 75 | Regular hexagon (3 tiers) |
| Example 2B | | 5 | 102 | 20 | 482 | 78 | Regular hexagon (5 tiers) |
| Example 3B | | 10 | 214 | 21 | 227 | 82 | Hexagonal pyramid |
| Example 4B | | 5 | 123 | 25 | 961 | 69 | Regular hexagon (5 tiers) |
| Example 5B | | 10 | 271 | 27 | 456 | 68 | Hexagonal pyramid |

### DESCRIPTION OF REFERENCE SIGNS

1: Transferring base material
2: Linear concave portion shaping layer
2a: Concave portion shaping layer
3: Release layer
4: Antiblocking layer
5: Protective layer
6: Primer layer
7: Decorative layer
8: Adhesive layer
9: Transfer layer
10: Transfer sheet
11: Linear concave portion
11a: Concave portion
12: Molded resin layer
20: Resin molded article
21: Resin molded article with transferring base material

## Claims

1. A transfer sheet comprising at least:
a transfer layer;
a transferring base material; and
a linear concave portion shaping layer, laminated in this order,
wherein a plurality of sections of the linear concave portion shaping layer are disposed on the transferring base material at an interval,
a line width of each of the sections of the linear concave portion shaping layer is 200 µm or more, and
the interval between the sections of the linear concave portion shaping layer is 0.7 times or more the line width.

2. The transfer sheet according to claim 1, wherein the linear concave portion shaping layer has a thickness of 20 µm or more.

3. The transfer sheet according to claim 1 or 2, wherein the transferring base material has a thickness of 50 µm or more and 100 µm or less.

4. The transfer sheet according to any one of claims 1 to 3, further comprising a release layer laminated between the transfer layer and the transferring base material.

5. The transfer sheet according to any one of claims 1 to 4, wherein the transfer layer includes a protective layer.

6. A method for producing a resin molded article, comprising a transfer step of disposing the transfer sheet according to any one of claims 1 to 5 in a mold, injecting a fluidized resin into the mold from a transfer layer side, and solidifying the resin to integrate the transfer sheet with an outer surface of a resin molding simultaneously with injection molding,
wherein the linear concave portion shaping layer provided in the transfer sheet is embedded in the transferring base material in the transfer step to form a linear concave portion corresponding to a shape of the linear concave portion shaping layer in a surface of the transfer layer.
